# EUROPEAN PATENT SPECIFICATION

(11) **EP 4 187 891 B1**
(45) Date of publication and mention of the grant of the patent: **08.10.2025**
(21) Application number: 21857502.5
(22) Date of filing: 04.08.2021
(51) Int. Cl.: G06F 1/3228, H04M 1/7243, G06F 3/0482, G06F 1/3234, H04M 1/72436, G06F 3/04842, G06F 3/04847, G06F 3/0488, G06F 3/04886, G06F 3/0486

(54) **METHOD AND SYSTEM FOR REPLYING TO MESSAGE, AND ELECTRONIC DEVICE**
VERFAHREN UND SYSTEM ZUR BEANTWORTUNG EINER NACHRICHT UND ELEKTRONISCHE VORRICHTUNG
PROCÉDÉ ET SYSTÈME DE RÉPONSE À UN MESSAGE, ET DISPOSITIF ÉLECTRONIQUE

(30) Priority: 20.08.2020 CN 202010844642
(43) Date of publication of application: 31.05.2023
(73) Proprietor: Huawei Technologies Co., Ltd., Longgang Shenzhen, Guangdong 518129 (CN)
(72) Inventor: YU, Ping, Shenzhen, Guangdong 518129 (CN); LIU, Min, Shenzhen, Guangdong 518129 (CN)
(74) Representative: Goddar, Heinz J.
(86) International application number: PCT/CN2021/110420
(87) International publication number: WO 2022/037407

(56) References cited:
- WO-A1-2015/196656
- CN-A- 103 037 319
- CN-A- 103 916 984
- CN-A- 104 822 128
- CN-A- 109 088 815
- CN-A- 109 275 032
- CN-A- 111 010 479
- CN-A- 112 134 788
- TW-A- 201 033 818
- TW-U- M 502 853
- US-A1- 2019 313 367

## Description

### TECHNICAL FIELD

This application relates to the field of terminals, and more specifically, to a message reply method, an electronic device, and a system.

### BACKGROUND

With popularization of smart devices, a user usually uses (or wears) a plurality of smart devices at the same time, to form a mobile phone-centric personal device set. In daily life and office environments, to avoid missing important notification messages on a mobile phone, people often synchronize social communication messages (such as WeChat, QQ, Meeting Reminder, and Clock) to other devices in real time. When a notification message arrives, a device that synchronizes the message vibrates or rings to notify the user. The user then decides whether to return to the mobile phone for processing the message in time based on the notification message.

The smart devices have many cross-device synchronization functions with notification messages, for example, program services such as Apple iMessage and Microsoft Your Phone. These synchronization solutions have a common feature, that is, all require that applications (application, App) with a same account be logged in to on a plurality of devices, and then control message delivery by using a server. In this way, messages are sent to different device clients, so as to implement cross-device synchronization of notification messages. If a receiving device does not log in to apps with a same account or the app is not installed on the receiving device, the receiving device cannot obtain a message from the server. Consequently, the user may miss some important information, thereby affecting user experience.
CN 104 822 128 A discloses a communication event warning method. The method comprises the steps that a first terminal receives a communication event; the first terminal judges whether the distance between a user and a second terminal is less than a preset threshold, and a communication connection is established between the second terminal and the first terminal; if the judgment result is yes, the communication event is sent to the second terminal, so that the second terminal warns a user. Through adoption of the method, when receiving a short message or a call, the first terminal judges whether the user is in an effective distance of the second terminal establishing the communication connection with the first terminal, if the judgment result is yes, the short message or the calling event of the first terminal is shifted to the second terminal, and the second terminal warns the user about the short message or the calling event. The method solves the technical problem that the second terminal effectively warns the user without affecting others when the first terminal receives the communication event.
CN 111 010 479 A discloses an information sharing method, a mobile terminal and a computer storage medium. The information sharing method is applied to the mobile terminal, and the mobile terminal has afirst communication number. The method comprises the following steps: acquiring information, and detecting whether the information meets a preset sharing condition or not; when determining that the information meets a preset sharing condition, sending the information to a second communication number. According to the information sharing method, the mobile terminal and the computer storage medium, when the mobile terminal with the first communication number obtains the information and detects that the information meets the preset sharing condition, the mobile terminal sends the information to the second communication number, so that a user corresponding to the second communication number can know the information in time, thereby achieving the information sharing between different communication numbers, improving the convenience of using the mobile terminal, and improving the user experience.
CN 103 037 319 A discloses a communication transferring method which is applied to a first electronic terminal, a mobile terminal and a server. The communication method includes accepting communication information from a second electronic terminal; detecting at least a third electronic terminal which is connected with the first electronic terminal through network; inquiring a first transferring condition which is memorized before, confirming at least a specific electronic terminal which satisfies the first transferring condition in at least the third electronic terminal; sending prompt information corresponding to the communication information to at least a specific electronic terminal and outputting the prompt information through at least the specific electronic terminal. The communication transferring method, the mobile terminal and the server have the advantage of solving influenced instant communication problems caused by some important communication messages missed when the mobile terminal is not at hand of the existing technology.
TW 201 033 818 A discloses a message display and reply system and method thereof. The message display and replay method of the invention includes the following steps: first of all, a data processing device and a mobile communication device synchronize with each other. Afterward, the mobile communication device receives an incoming message, and the data processing device synchronously receives the incoming message from the mobile communication device. Then, the data processing device displays the received incoming message. At last, after the data processing device receives a reply message, corresponding to the incoming message, edited by a user, the data processing device transmits the reply message to the mobile communication device, and then the mobile communication device sends the reply message out.

### SUMMARY

This application provides a message reply method, an electronic device, and a system, so as to improve a multi-device collaboration capability, prevent a user from missing an important message, and improve user experience. The invention provides a system of claim 1, a message reply method of claim 11, an electronic device of claim 12, and a computer-readable storage medium of claim 13. Further embodiments are disclosed in the dependent claims.

According to a first aspect, a system of claim 1 is provided. The system includes a first electronic device and a second electronic device. The first electronic device is configured to receive a message. The first electronic device is further configured to send the message and indication information to the second electronic device when determining that a device on which an owner of the first electronic device focuses is the second electronic device, where the indication information indicates the second electronic device to add a reply control for the message. The second electronic device is configured to display a message reminder box, where the message reminder box includes the message and the reply control. The second electronic device is further configured to send reply content to the first electronic device when detecting an operation of replying to the message by a user. The first electronic device is further configured to reply to the message based on the reply content.

In this embodiment of this application, when the first electronic device determines that the device on which the owner of the first electronic device focuses is not the first electronic device but the second electronic device, the first electronic device may send the message and the indication information to the second electronic device, so that the second electronic device can present the message reminder box including the message and the reply control to the user. In this way, the owner of the first electronic device can conveniently complete a virtual reply to the message on the second electronic device. The second electronic device may send the reply content to the first electronic device, so that the first electronic device completes a real reply to the message. This helps the user receive a reminder of the message in time and complete a reply to the message, avoids a process in which the user returns to the first electronic device to reply to the message, and also prevents the user from missing an important message.

In some possible implementations, the second electronic device may be a device in a device list of the first electronic device, or the second electronic device may be a device around the first electronic device.

In some possible implementations, the first electronic device is specifically configured to reply to the message based on the reply content and an API provided by an application corresponding to the message, or reply to the message based on the reply content and a drag event.

In some possible implementations, the indication information may be a quick reply flag attribute.

With reference to the first aspect, in some implementations of the first aspect, the first electronic device is specifically configured to send the message identified by using identification information to the second electronic device; and the second electronic device is specifically configured to send the reply content identified by using the identification information to the first electronic device.

In this embodiment of this application, the first electronic device may send the message identified by using the identification information to the second electronic device. In this way, when obtaining the reply content of the user, the second electronic device may identify the message by using the identification information, so that the first electronic device clearly learns of a message for which the reply content is made. When the first electronic device receives a plurality of messages, this improves accuracy of replying to a message by the first electronic device.

In some possible implementations, the identification information may be a notification ID attribute and/or a notification channel attribute.

With reference to the first aspect, in some implementations of the first aspect, the first electronic device is further configured to: display a first interface before receiving the message; and display the first interface after replying to the message.

In this embodiment of this application, after completing the real reply to the message, the first electronic device may restore to a display interface displayed before receiving the message, so that a process in which the first electronic device makes the real reply to the message is imperceptible to the user. This improves user experience.

With reference to the first aspect, in some implementations of the first aspect, content of the message is text information, the second electronic device has a voice function, and the second electronic device is further configured to: after receiving the message, prompt the user with the text information by using a voice.

In this embodiment of this application, for the second electronic device having the voice function, when the message received by the second electronic device from the first electronic device is a text type message, by using a voice, the second electronic device may prompt the user that the message is received or prompt the user with the content of the message. This prevents the user from viewing a screen of the second electronic device, helps the user obtain a prompt of the message by using a voice prompt, prevents the user from missing an important message, and improves user experience.

In some possible implementations, the second electronic device is a head unit or a smart speaker.

With reference to the first aspect, in some implementations of the first aspect, the second electronic device is specifically configured to: before sending the reply content to the first electronic device, collect voice information with which the user replies; and send the voice information to the first electronic device, or send text information corresponding to the voice signal to the first electronic device.

In some possible implementations, if the second electronic device sends the collected voice information to the first electronic device, the first electronic device may reply to the message with the voice information, or may reply to the message with the text information corresponding to the voice information.

With reference to the first aspect, in some implementations of the first aspect, the reply content includes a file.

In this embodiment of this application, the user may reply with a multimedia file (for example, a picture or a video) or a working file (for example, a Word document or an Excel document) on the second electronic device. This helps improve diversity of reply content of the user, and helps improve experience of replying to a message by the user.

With reference to the first aspect, in some implementations of the first aspect, the first electronic device is further configured to: before sending the message and the indication information to the second electronic device, determine that a type of the message is a message type that is set by the user; or before sending the message and the indication information to the second electronic device, determine that the message is an instant messaging IM type message.

In this embodiment of this application, before forwarding the message to the second electronic device, the first electronic device may first determine that the message is of the message type that is set by the user or is the IM type message. This prevents some unimportant messages from being forwarded to the second electronic device, prevents these unimportant messages from interfering with the user, and improves user experience.

With reference to the first aspect, in some implementations of the first aspect, the first electronic device is further configured to: before sending the message and the indication information to the second electronic device, determine that the second electronic device is a device that is set by the user for receiving message forwarding; or before sending the message and the indication information to the second electronic device, determine that an account for logging in to the first electronic device is associated with an account for logging in to the second electronic device.

In this embodiment of this application, before forwarding the message to the second electronic device, the first electronic device may first determine that the second electronic device is a device that is set by the user for receiving message forwarding, or determine that the account for logging in to the first electronic device is associated with the account for logging in to the second electronic device. This prevents the message from being forwarded to a device that is not authorized by the user, improves message forwarding security, avoids disclosure of user privacy, and improves user experience.

With reference to the first aspect, in some implementations of the first aspect, the first electronic device is specifically configured to send request information to the second electronic device when determining that a device on which the owner of the first electronic device currently focuses is not the first electronic device, where the request information is used to request the second electronic device to determine whether the owner of the first electronic device focuses on the second electronic device; the second electronic device is further configured to send response information to the first electronic device based on the request information, where the response information is used to indicate that the device on which the owner of the first electronic device currently focuses is the second electronic device; and the first electronic device is specifically configured to send the message to the second electronic device in response to receiving the response information.

In this embodiment of this application, the second electronic device may be a device in a message forwarding list of the first electronic device, and the first electronic device and the second electronic device may be devices logged in to by using a same account (or the first electronic device and the second electronic device may store information about a same user). In this way, after receiving the request information, the second electronic device may collect a user feature, match the user feature against a preset user feature in the second electronic device, and if the matching succeeds, determine that the device on which the owner of the first electronic device currently focuses is the second electronic device, to send the response information to the first electronic device. This improves message forwarding security, prevents a user other than the owner of the first electronic device from receiving the prompt of the message, and improves user experience.

In some possible implementations, after receiving the request information, the second electronic device may first determine whether the first electronic device and the second electronic device are devices logged in to by using a same account. If the second electronic device determines that the first electronic device and the second electronic device are devices logged in to by using the same account, the second electronic device may collect, by using a user feature collection apparatus, feature information of the user focusing on the second electronic device, match the collected user feature information against preset user feature information in the second electronic device, and send the response information to the first electronic device if the matching succeeds.

With reference to the first aspect, in some implementations of the first aspect, the second electronic device includes a user feature collection apparatus, and the first electronic device is specifically configured to send request information to the second electronic device when determining that a device on which the owner of the first electronic device currently focuses is not the first electronic device, where the request information is used to request the second electronic device to determine whether the owner of the first electronic device focuses on the second electronic device; the second electronic device is further configured to: collect a user feature based on the request information by using the user feature collection apparatus, and send the user feature to the first electronic device; and the first electronic device is specifically configured to: before sending the message to the second electronic device, determine that the user feature matches a preset user feature in the first electronic device.

In this embodiment of this application, the second electronic device may be a device in a message forwarding list of the first electronic device, and the first electronic device and the second electronic device may not be devices logged in to by using a same account (or the first electronic device and the second electronic device may store information about different users). Alternatively, the second electronic device may be a device around the first electronic device. In this way, after receiving the request information, the second electronic device can collect, by using the user feature collection apparatus, feature information of the user that is focusing on the second electronic device, and send the feature information to the first electronic device. The first electronic device matches the feature information against preset user feature information in the first electronic device, and forwards the message to the second electronic device if the matching succeeds. This improves message forwarding security, prevents a user other than the owner of the first electronic device from receiving the prompt of the message, and improves user experience.

With reference to the first aspect, in some implementations of the first aspect, the message is a message of a first application, and the second electronic device is a device on which the first application is not installed.

In this embodiment of this application, if the second electronic device is a device on which the first application is not installed, the second electronic device may also add the reply control to the message reminder box after receiving the indication information, so that the second electronic device can obtain the reply content of the user by using the reply content entered by the user and a detected operation of tapping the reply control, and send the reply content to the first electronic device. In this way, the real reply to the message is completed on the first electronic device. This helps the user receive a reminder of the message in time, prevents the user from missing an important message, and improves user experience.

According to a second aspect, a message reply method of claim 11 is provided. The method is applied to a first electronic device. The method includes: The first electronic device receives a message. The first electronic device sends the message and indication information to a second electronic device when determining that a device on which an owner of the first electronic device focuses is the second electronic device, where the indication information indicates the second electronic device to add a reply control for the message. The first electronic device receives reply content that is sent by the second electronic device for the message. The first electronic device replies to the message based on the reply content.

In this embodiment of this application, when the first electronic device determines that the device on which the owner of the first electronic device focuses is not the first electronic device but the second electronic device, the first electronic device may send the message and the indication information to the second electronic device, so that the second electronic device can present a message reminder box including the message and the reply control to a user. In this way, the owner of the first electronic device can conveniently complete a virtual reply to the message on the second electronic device. The second electronic device may send the reply content to the first electronic device, so that the first electronic device completes a real reply to the message. This helps the user receive a reminder of the message in time and complete a reply to the message, avoids a process in which the user returns to the first electronic device to reply to the message, and prevents the user from missing an important message.

With reference to the second aspect, in some implementations of the second aspect, that the first electronic device sends the message to a second electronic device includes: The first electronic device sends the message identified by using identification information to the second electronic device.

That the first electronic device receives reply content that is sent by the second electronic device for the message includes: The first electronic device receives the reply content that is identified by using the identification information and that is sent by the second electronic device.

In this embodiment of this application, the first electronic device may send the message identified by using the identification information to the second electronic device. In this way, when obtaining the reply content of the user, the second electronic device may identify the message by using the identification information, so that the first electronic device clearly learns of a message for which the reply content is made. When the first electronic device receives a plurality of messages, this improves accuracy of replying to a message by the first electronic device.

In some possible implementations, the identification information may be a notification ID attribute and/or a notification channel attribute.

With reference to the second aspect, in some implementations of the second aspect, the method further includes: The first electronic device displays a first interface before receiving the message; and the first electronic device displays the first interface after replying to the message.

In this embodiment of this application, after completing the real reply to the message, the first electronic device may restore to a display interface displayed before receiving the message, so that a process in which the first electronic device makes the real reply to the message is imperceptible to the user. This improves user experience.

With reference to the second aspect, in some implementations of the second aspect, the reply content is voice information, or the reply content is text information corresponding to the voice information; and the voice information is voice information with which the user replies and that is collected by the second electronic device.

In this embodiment of this application, for the second electronic device having a voice function, when the message received by the second electronic device from the first electronic device is a text type message, by using a voice, the second electronic device may prompt the user that the message is received or prompt the user with the content of the message. This prevents the user from viewing a screen of the second electronic device, helps the user obtain a prompt of the message by using a voice prompt, prevents the user from missing an important message, and improves user experience.

In some possible implementations, the second electronic device is a head unit or a smart speaker.

With reference to the second aspect, in some implementations of the second aspect, the reply content is a file.

In this embodiment of this application, the user may reply with a multimedia file (for example, a picture or a video) or a working file (for example, a Word document or an Excel document) on the second electronic device. This helps improve diversity of reply content of the user, and helps improve experience of replying to a message by the user.

With reference to the second aspect, in some implementations of the second aspect, the method further includes: Before sending the message and the indication information to the second electronic device, the first electronic device determines that a type of the message is a message type that is set by the user; or before sending the message and the indication information to the second electronic device, the first electronic device determines that the message is an instant messaging IM type message.

In this embodiment of this application, before forwarding the message to the second electronic device, the first electronic device may first determine that the message is of the message type that is set by the user or is the IM type message. This prevents some unimportant messages from being forwarded to the second electronic device, prevents these unimportant messages from interfering with the user, and improves user experience.

With reference to the second aspect, in some implementations of the second aspect, the method further includes: Before sending the message and the indication information to the second electronic device, the first electronic device determines that the second electronic device is a device that is set by the user for receiving message forwarding; or before sending the message and the indication information to the second electronic device, the first electronic device determines that an account for logging in to the first electronic device is associated with an account for logging in to the second electronic device.

In this embodiment of this application, before forwarding the message to the second electronic device, the first electronic device may first determine that the second electronic device is a device that is set by the user for receiving message forwarding, or determine that the account for logging in to the first electronic device is associated with the account for logging in to the second electronic device. This prevents the message from being forwarded to a device that is not authorized by the user, improves message forwarding security, avoids disclosure of user privacy, and improves user experience.

With reference to the second aspect, in some implementations of the second aspect, before the first electronic device sends the message and the indication information to the second electronic device, the method further includes: The first electronic device sends request information to the second electronic device when determining that a device on which the owner of the first electronic device currently focuses is not the first electronic device, where the request information is used to request the second electronic device to determine whether the owner of the first electronic device focuses on the second electronic device. The first electronic device receives response information sent by the second electronic device, where the response information is used to indicate that the device on which the owner of the first electronic device currently focuses is the second electronic device.

In this embodiment of this application, the second electronic device may be a device in a message forwarding list of the first electronic device, and the first electronic device and the second electronic device may be devices logged in to by using a same account (or the first electronic device and the second electronic device may store information about a same user). In this way, after receiving the request information, the second electronic device may collect a user feature, match the user feature against a preset user feature in the second electronic device, and if the matching succeeds, determine that the device on which the owner of the first electronic device currently focuses is the second electronic device, to send the response information to the first electronic device. This improves message forwarding security, prevents a user other than the owner of the first electronic device from receiving the prompt of the message, and improves user experience.

In some possible implementations, after receiving the request information, the second electronic device may first determine whether the first electronic device and the second electronic device are devices logged in to by using a same account. If the second electronic device determines that the first electronic device and the second electronic device are devices logged in to by using the same account, the second electronic device may collect, by using a user feature collection apparatus, feature information of the user focusing on the second electronic device, match the collected user feature information against preset user feature information in the second electronic device, and send the response information to the first electronic device if the matching succeeds.

With reference to the second aspect, in some implementations of the second aspect, the second electronic device includes a user feature collection apparatus. Before the first electronic device sends the message and the indication information to the second electronic device, the method further includes: The first electronic device sends request information to the second electronic device when determining that a device on which the owner of the first electronic device currently focuses is not the first electronic device, where the request information is used to request the second electronic device to determine whether the owner of the first electronic device focuses on the second electronic device. The first electronic device receives a user feature sent by the second electronic device, where the user feature is a user feature collected by the second electronic device by using the user feature collection apparatus. The first electronic device determines that the user feature matches a preset user feature in the first electronic device.

In this embodiment of this application, the second electronic device may be a device in a message forwarding list of the first electronic device, and the first electronic device and the second electronic device may not be devices logged in to by using a same account (or the first electronic device and the second electronic device may store information about different users). Alternatively, the second electronic device may be a device around the first electronic device. In this way, after receiving the request information, the second electronic device can collect, by using the user feature collection apparatus, feature information of the user that is focusing on the second electronic device, and send the feature information to the first electronic device. The first electronic device matches the feature information against preset user feature information in the first electronic device, and forwards the message to the second electronic device if the matching succeeds. This improves message forwarding security, prevents a user other than the owner of the first electronic device from receiving the prompt of the message, and improves user experience.

According to a third, not claimed aspect, a message reply method is provided. The method is applied to a second electronic device. The method includes: The second electronic device receives a message and indication information that are sent by a first electronic device, where the indication information indicates the second electronic device to add a reply control for the message. The second electronic device displays a message reminder box, where the message reminder box includes the message and the reply control. The second electronic device sends reply content to the first electronic device when detecting an operation of replying to the message by a user.

In this embodiment of this application, when the first electronic device determines that a device on which an owner of the first electronic device focuses is not the first electronic device but the second electronic device, the first electronic device may send the message and the indication information to the second electronic device, so that the second electronic device can present the message reminder box including the message and the reply control to the user. In this way, the owner of the first electronic device can conveniently complete a virtual reply to the message on the second electronic device. The second electronic device may send the reply content to the first electronic device, so that the first electronic device completes a real reply to the message. This helps the user receive a reminder of the message in time and complete a reply to the message, prevents the user from returning to the first electronic device to reply to the message, and also prevents the user from missing an important message.

With reference to the third aspect, in some implementations of the third aspect, the method further includes: The second electronic device receives the message that is identified by using identification information and that is sent by the first electronic device. That the second electronic device sends reply content to the first electronic device includes: The second electronic device sends the reply content identified by using the identification information to the first electronic device.

In this embodiment of this application, the first electronic device may send the message identified by using the identification information to the second electronic device. In this way, when obtaining the reply content of the user, the second electronic device may identify the message by using the identification information, so that the first electronic device clearly learns of a message for which the reply content is made. When the first electronic device receives a plurality of messages, this improves accuracy of replying to a message by the first electronic device.

In some possible implementations, the identification information may be a notification ID attribute and/or a notification channel attribute.

With reference to the third aspect, in some implementations of the third aspect, content of the message is text information, the second electronic device has a voice function, and the method further includes: After receiving the message, the second electronic device prompts the user with the text information by using a voice.

In this embodiment of this application, for the second electronic device having the voice function, when the message received by the second electronic device from the first electronic device is a text type message, by using a voice, the second electronic device may prompt the user that the message is received or prompt the user with the content of the message. This prevents the user from viewing a screen of the second electronic device, helps the user obtain a prompt of the message by using a voice prompt, prevents the user from missing an important message, and improves user experience.

In some possible implementations, the second electronic device is a head unit or a smart speaker.

With reference to the third aspect, in some implementations of the third aspect, that the second electronic device sends reply content to the first electronic device includes: The second electronic device collects voice information with which the user replies. The second electronic device sends the voice information to the first electronic device, or sends text information corresponding to the voice signal to the first electronic device.

In some possible implementations, if the second electronic device sends the collected voice information to the first electronic device, the first electronic device may reply to the message with the voice information, or may reply to the message with the text information corresponding to the voice information.

With reference to the third aspect, in some implementations of the third aspect, the reply content includes a file.

In this embodiment of this application, the user may reply with a multimedia file (for example, a picture or a video) or a working file (for example, a Word document or an Excel document) on the second electronic device. This helps improve diversity of reply content of the user, and helps improve experience of replying to a message by the user.

With reference to the third aspect, in some implementations of the third aspect, before the second electronic device receives the message and the indication information that are sent by the first electronic device, the method further includes: The second electronic device receives request information sent by the first electronic device, where the request information is used to request the second electronic device to determine whether an owner of the first electronic device focuses on the second electronic device. The second electronic device sends response information to the first electronic device based on the request information, where the response information is used to indicate that a device on which the owner of the first electronic device currently focuses is the second electronic device.

In this embodiment of this application, the second electronic device may be a device in a message forwarding list of the first electronic device, and the first electronic device and the second electronic device may be devices logged in to by using a same account (or the first electronic device and the second electronic device may store information about a same user). In this way, after receiving the request information, the second electronic device may collect a user feature, match the user feature against a preset user feature in the second electronic device, and if the matching succeeds, determine that the device on which the owner of the first electronic device currently focuses is the second electronic device, to send the response information to the first electronic device. This improves message forwarding security, prevents a user other than the owner of the first electronic device from receiving the prompt of the message, and improves user experience.

With reference to the third aspect, in some implementations of the third aspect, the second electronic device includes a user feature collection apparatus. Before the second electronic device receives the message and the indication information that are sent by the first electronic device, the method further includes: The second electronic device receives request information sent by the first electronic device, where the request information is used to request the second electronic device to determine whether an owner of the first electronic device focuses on the second electronic device. The second electronic device collects, based on the request information, a user feature by using the user feature collection apparatus, and sends the user feature to the first electronic device.

In this embodiment of this application, the second electronic device may be a device in a message forwarding list of the first electronic device, and the first electronic device and the second electronic device may not be devices logged in to by using a same account (or the first electronic device and the second electronic device may store information about different users). Alternatively, the second electronic device may be a device around the first electronic device. In this way, after receiving the request information, the second electronic device can collect, by using the user feature collection apparatus, feature information of the user that is focusing on the second electronic device, and send the feature information to the first electronic device. The first electronic device matches the feature information against preset user feature information in the first electronic device, and forwards the message to the second electronic device if the matching succeeds. This improves message forwarding security, prevents a user other than the owner of the first electronic device from receiving the prompt of the message, and improves user experience.

With reference to the third aspect, in some implementations of the third aspect, the message is a message of a first application, and the second electronic device is a device on which the first application is not installed.

In this embodiment of this application, if the second electronic device is a device on which the first application is not installed, the second electronic device may also add the reply control to the message reminder box after receiving the indication information, so that the second electronic device can obtain the reply content of the user by using the reply content entered by the user and a detected operation of tapping the reply control, and send the reply content to the first electronic device. In this way, the real reply to the message is completed on the first electronic device. This helps the user receive a reminder of the message in time and complete replying to the message, prevents the user from missing an important message, and improves user experience.

According to a fourth aspect, a message reply apparatus is provided. The message reply apparatus is disposed in a first electronic device. The apparatus includes: a first receiving unit, configured to receive a message; a sending unit, configured to send the message and indication information to a second electronic device when determining that a device on which an owner of the first electronic device focuses is the second electronic device, where the indication information indicates the second electronic device to add a reply control for the message; a second receiving unit, configured to receive reply content that is sent by the second electronic device for the message; and a reply unit, configured to reply to the message based on the reply content.

According to a fifth aspect, a message reply apparatus is provided. The message reply apparatus is disposed in a second electronic device. The apparatus includes: a receiving unit, configured to receive a message and indication information that are sent by a first electronic device, where the indication information indicates the second electronic device to add a reply control for the message; a display unit, configured to display a message reminder box, where the message reminder box includes the message and the reply control; and a sending unit, configured to send reply content to the first electronic device when detecting an operation of replying to the message by a user.

According to a sixth aspect, an electronic device of claim 12 is provided, including one or more processors, a memory, and one or more computer programs. The one or more computer programs are stored in the memory. The one or more computer programs include instructions. When the instructions are executed by the electronic device, the electronic device is enabled to perform the message reply method in any possible implementation of the second aspect.

According to a seventh, not claimed aspect, an electronic device is provided, including one or more processors, a memory, and one or more computer programs. The one or more computer programs are stored in the memory. The one or more computer programs include instructions. When the instructions are executed by the electronic device, the electronic device is enabled to perform the message reply method in any possible implementation of the third aspect.

According to an eighth aspect, a computer program product including instructions is provided. When the computer program product runs on a first electronic device, the first electronic device is enabled to perform the message reply method according to the second aspect.

According to a ninth not claimed aspect, a computer-readable storage medium is provided, including instructions. When the instructions are run on a first electronic device, the first electronic device is enabled to perform the message reply method according to the second aspect; or when the instructions are run on a second electronic device, the second electronic device is enabled to perform the message reply method according to the third aspect.

According to a tenth aspect, a chip is provided, configured to execute instructions. When the chip runs, the chip performs the message reply method according to the second aspect.

### BRIEF DESCRIPTION OF DRAWINGS

FIG. 1 is a schematic diagram of a hardware structure of an electronic device according to an embodiment of this application;
FIG. 2 is a block diagram of a software structure according to an embodiment of this application;
FIG. 3(a) to FIG. 3(f) show a group of graphical user interfaces according to an embodiment of this application;
FIG. 4(a) to FIG. 4(f) show another group of graphical user interfaces according to an embodiment of this application;
FIG. 5(a) to FIG. 5(d) show another group of graphical user interfaces according to an embodiment of this application;
FIG. 6(a) to FIG. 6(f) show another group of graphical user interfaces according to an embodiment of this application;
FIG. 7(a) to FIG. 7(d) show another group of graphical user interfaces according to an embodiment of this application;
FIG. 8 shows an internal implementation process of a source (source) end and a sink (sink) end according to an embodiment of this application;
FIG. 9 shows another group of graphical user interfaces according to an embodiment of this application;
FIG. 10 shows a process of reproducing a source-end interface on a sink end through audio and video collection according to an embodiment of this application;
FIG. 11(a) to FIG. 11(e) show another group of graphical user interfaces according to an embodiment of this application;
FIG. 12(a) and FIG. 12(b) show another group of graphical user interfaces according to an embodiment of this application;
FIG. 13(a) to FIG. 13(d) show another group of graphical user interfaces according to an embodiment of this application;
FIG. 14 is a schematic flowchart of a message reply method according to an embodiment of this application;
FIG. 15 is a schematic block diagram of a message reply apparatus according to an embodiment of this application;
FIG. 16 is a schematic block diagram of a message reply apparatus according to an embodiment of this application; and
FIG. 17 is a schematic diagram of a structure of an electronic device according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the description in embodiments of this application, "a plurality of" means two or more than two.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

A method provided in embodiments of this application may be applied to an electronic device, for example, a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

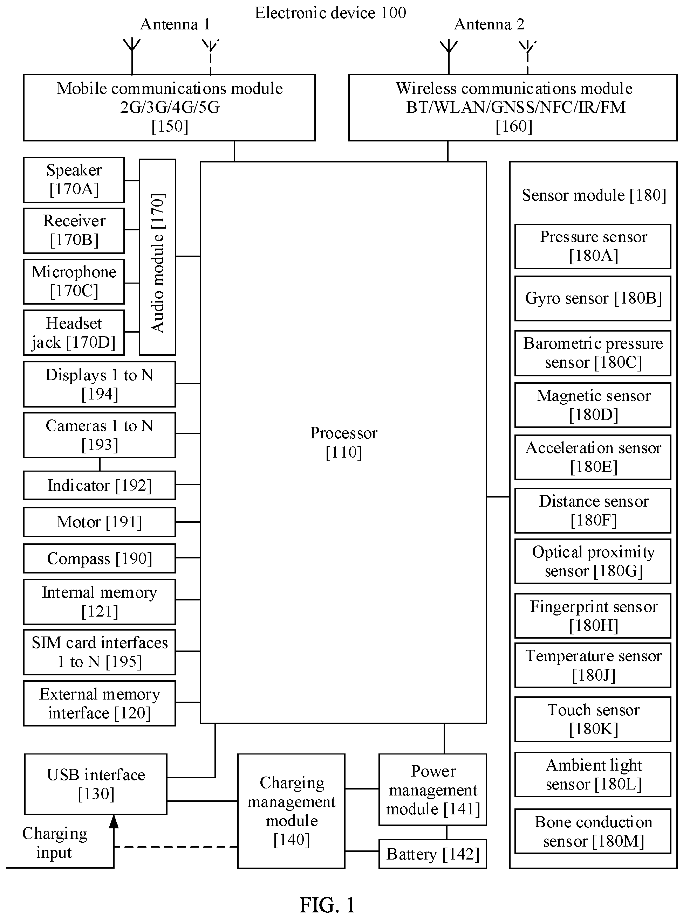

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, thereby implementing a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communications module 160 through the PCM bus interface. In some embodiments, the audio module 170 may alternatively transmit an audio signal to the wireless communications module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communications bus. The bus converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communications module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini-USB interface, a micro-USB interface, a USB Type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or an input of the charging management module 140, to supply power to the processor 110, the internal memory 121, an external memory, the display 194, the camera 193, the wireless communications module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may be alternatively disposed in a same component.

A wireless communication function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communications frequency bands. Different antennas may be further multiplexed, to increase antenna utilization. For example, the antenna 1 may be multiplexed as a diversity antenna of a wireless local area network. In some other embodiments, the antenna may be used in combination with a tuning switch.

The mobile communications module 150 may provide a wireless communication solution that is applied to the electronic device 100 and that includes 2G/3G/4G/5G. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit the electromagnetic wave to the modem processor for demodulation. The mobile communications module 150 may further amplify a signal modulated by the modem processor, and convert the signal into an electromagnetic wave for radiation through the antenna 1. In some embodiments, at least some functional modules in the mobile communications module 150 may be disposed in the processor 110. In some embodiments, at least some functional modules of the mobile communications module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communications module 150 or another functional module.

The wireless communications module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communications module 160 may be one or more components integrating at least one communications processor module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communications module 150 in the electronic device 100 are coupled, and the antenna 2 and the wireless communications module 160 in the electronic device 100 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a microSD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement audio functions such as music playing and recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130 or a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a Messages application icon, an instruction for viewing an SMS message is performed. When a touch operation whose touch operation intensity is greater than or equal to the first pressure threshold is performed on the Messages application icon, an instruction for creating an SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a touch panel. The touch sensor 180K may be disposed on the display 194, and the touch sensor 180K and the display 194 constitute a touchscreen. The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

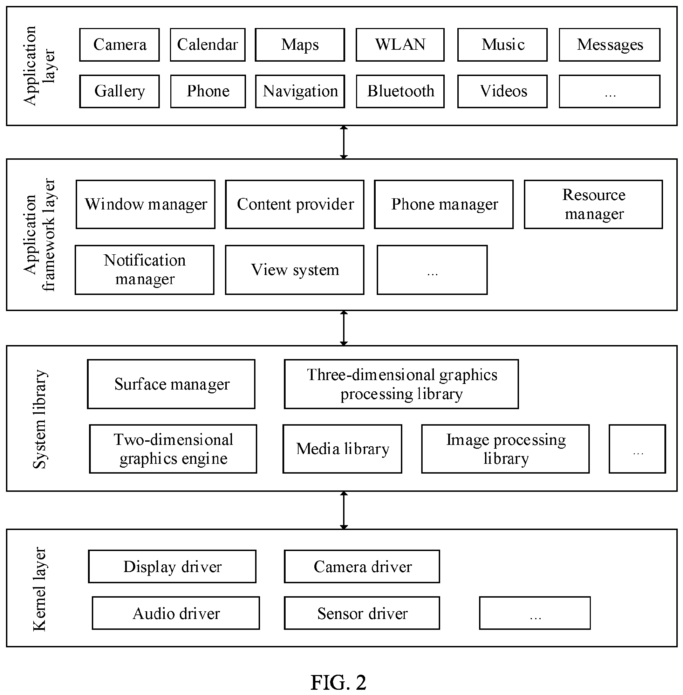

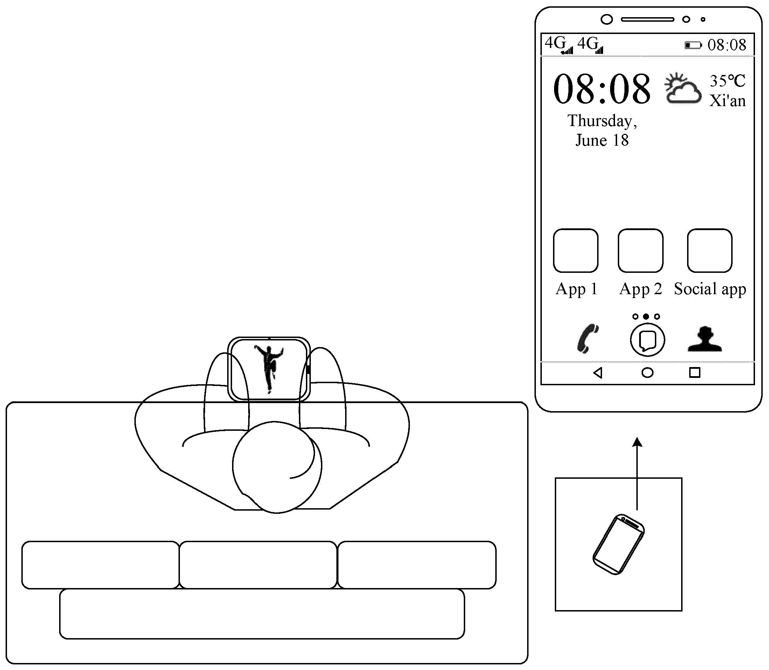

FIG. 2 is a block diagram of a software structure of the electronic device 100 according to this embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a Messages notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run in the background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and managing the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

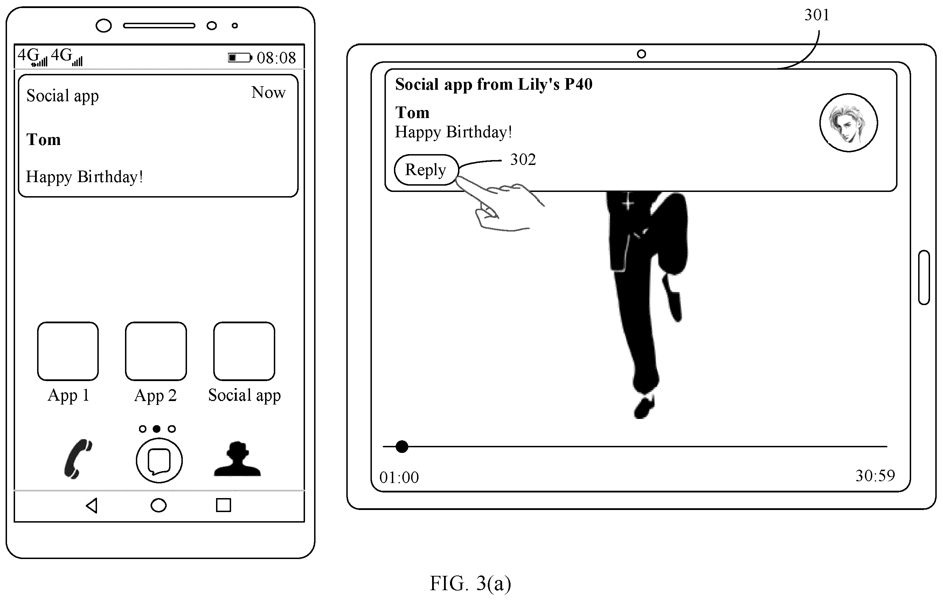

FIG. 3(a) to FIG. 3(f) show a group of graphical user interfaces (graphical user interface, GUI) according to an embodiment of this application.

A user Lily is currently using a tablet computer to watch a video, and a mobile phone is placed by the user Lily on a table beside the user.

Refer to the GUI shown in FIG. 3(a). The mobile phone receives a message (for example, Happy Birthday!) of a social app from a user Tom. In this case, the mobile phone may forward the message to the tablet computer on which the user is focusing, and the tablet computer may display a message reminder box 301. The message reminder box 301 includes a message source (for example, a name of the social app, where the message is from P40 of the user Lily), information about the user who sends the message (for example, "Tom" and an avatar of the user Tom), content of the message (for example, Happy Birthday!), and a control 302.

It should be understood that the tablet computer may be logged in with a same account of the social app as the mobile phone, or the social app may be installed on the tablet computer but the user does not use a same account as the mobile phone to log in to the social app, or the tablet computer may be a device on which the social app is not installed.

In this embodiment of this application, after the mobile phone receives a notification, if the mobile phone determines that the user currently focuses on the tablet computer instead of the mobile phone, the mobile phone can add content of the message, information about a user who sends the message, and a "quick reply" attribute to information sent to the tablet computer. Further, the mobile phone may further add information about the mobile phone to the information sent to the tablet computer. In this way, the tablet computer can display the reminder box 301 to the user based on the information sent by the mobile phone.

It should be understood that a notification message forwarded by the mobile phone in this embodiment of this application may be a message of a notification type that is set in advance by the user. For example, the user may set, in system settings, a notification message of an app, for example, WeChat, QQ, or DingTalk, as a message that can be forwarded. Alternatively, a notification message forwarded by the mobile phone may be a default message of an instant messaging (instant message, IM) type (for example, Messages or WeChat).

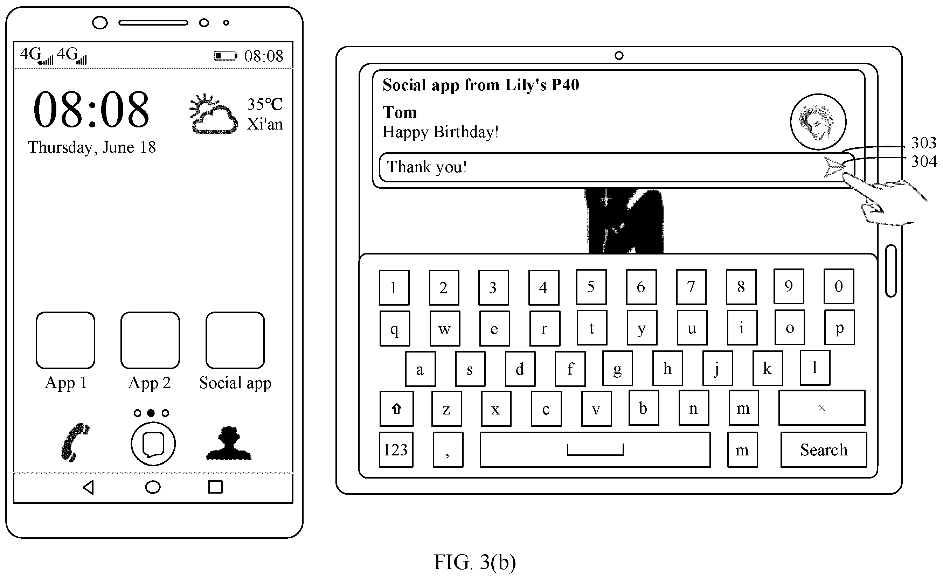

After detecting an operation of tapping the control 302 by the user, the tablet computer may display the GUI shown in FIG. 3(b).

After the mobile phone receives the message for a period of time, the message is automatically hidden. The user may access a notification center or drop down a menu to process the message.

After detecting the operation of tapping the control 302 by the user, the tablet computer may display a text input box 303 in the message reminder box, and may further display a sending control 304 in the text input box 303. The tablet computer may further invoke a system input method. The user may edit, by using the input method, content with which the user needs to reply (for example, "Thank you!"), and the reply content of the user may be displayed in the text input box 303.

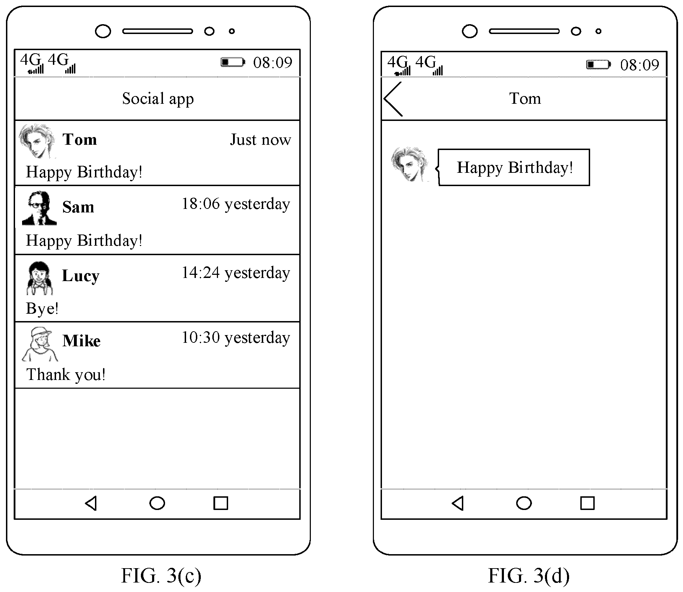

After the tablet computer detects an operation of tapping the control 304 by the user, the tablet computer may send the reply content to the mobile phone. In addition, the input method and the message reminder box on the tablet computer may be automatically hidden. For a change of a GUI on the mobile phone, refer to FIG. 3(c) to FIG. 3(f).

Refer to the GUI shown in FIG. 3(c). After the mobile phone receives the reply content of the user that is sent by the tablet computer, the mobile phone may automatically start the social app. Historical chat records with the user Tom, a user Sam, a user Lucy, and a user Mike may be sequentially displayed on a display interface of the social app in a sequence of message receiving moments.

Refer to the GUI shown in FIG. 3(d). The mobile phone may automatically open a chat interface with the user Tom. The message (Happy Birthday!) sent by the user Tom to the user Lily may be displayed on the chat interface when the chat interface is opened.

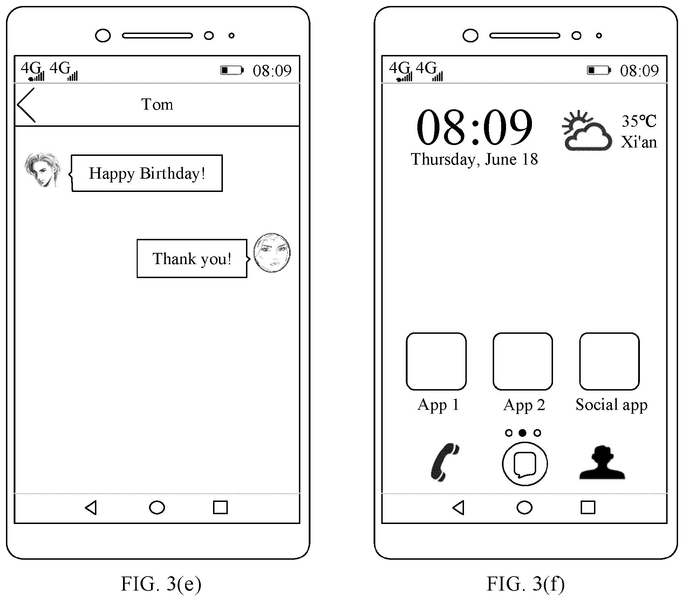

Refer to the GUI shown in FIG. 3(e). The mobile phone may automatically reply, to the user Tom, with the content with which the user replies on the tablet computer. After completing reply, the mobile phone may return to a state before the message is received. Refer to FIG. 3(f). The mobile phone may automatically return to a home screen of the mobile phone from the chat interface with the user Tom in the social app.

It should be understood that, in this embodiment of this application, after the tablet computer detects the operation of tapping the control 304 by the user, a real reply to the message to which the user replies is not completed. A real reply process is actually completed on the mobile phone. For example, after the mobile phone displays the interface shown in FIG. 3(e), the mobile phone completes the real reply to the message.

It should be further understood that a process in which the mobile phone completes replying to the message may be alternatively implemented internally. After receiving the reply content of the user that is sent by the tablet computer, the mobile phone may automatically complete replying to the message in the background. In other words, a process in which the mobile phone completes a real reply to the message may be imperceptible to the user.

In this embodiment of this application, the user can directly complete replying to the message on the tablet computer, without returning to the mobile phone to process the message. This can avoid the user from missing important information, and also avoids a process in which the user returns to the mobile phone to process the message, thereby helping improve user experience.

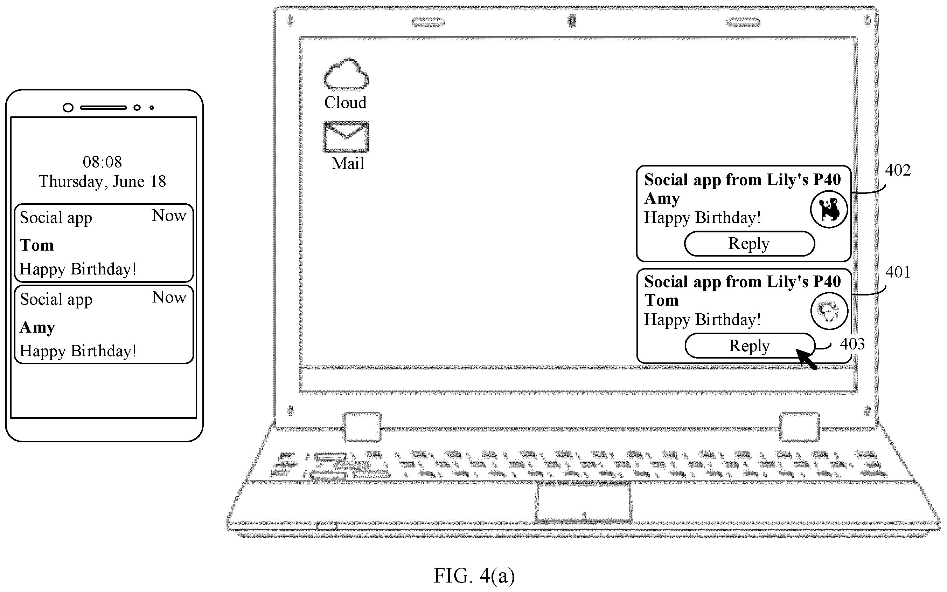

FIG. 4(a) to FIG. 4(f) show another group of GUIs according to an embodiment of this application.

A user is using a notebook computer in a room to work, and a mobile phone is in a screen-locked state and is placed by the user in another room.

Refer to the GUI shown in FIG. 4(a). The mobile phone receives a message (for example, Happy Birthday!) of a social app from a user Tom, and a message (for example, Happy Birthday!) of the social app from a user Amy. In this case, the mobile phone may send the messages from the user Tom and the user Amy to the notebook computer on which the user is focusing, and the notebook computer may display a message reminder box 401 and a message reminder box 402. The first message reminder box 401 includes a message source (for example, the message is a message of the social app, and the message is from P40 of the user Lily), information about the user who sends the message (for example, "Tom" and an avatar of the user Tom), content of the message (for example, Happy Birthday!), and a control 403. The second message reminder box 402 includes a message source (for example, the message is a message of the social app, and the message is from P40 of the user Lily), information about the user who sends the message (for example, "Amy" and an avatar of the user Amy), content of the message (for example, Happy Birthday!), and a reply control.

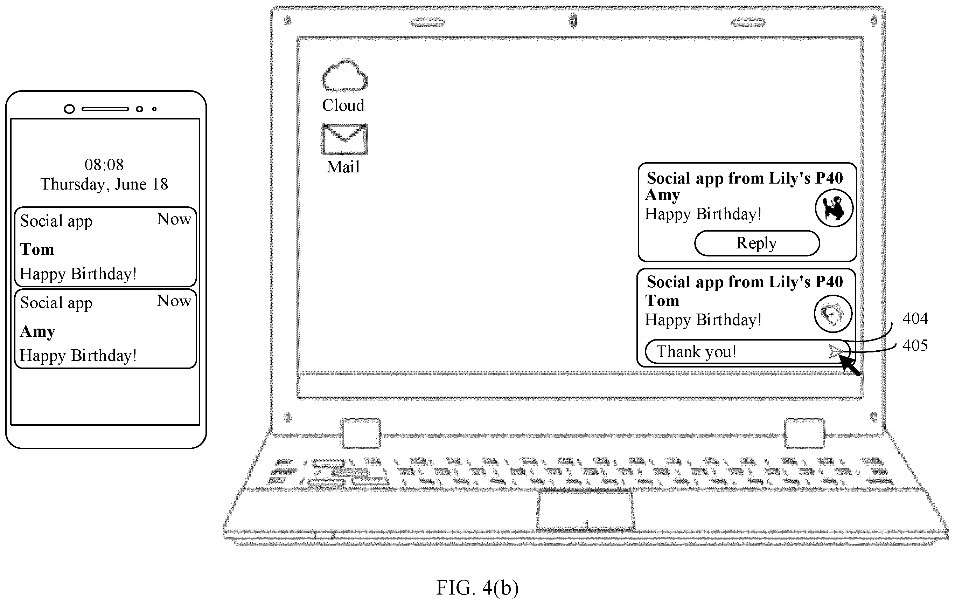

After detecting an operation of tapping a control 403 by the user, the notebook computer may display the GUI shown in FIG. 4(b).

The notebook computer may display a text input box 404 in the message reminder box, and may further display a sending control 405 in the text input box 404. In addition, the notebook computer may further detect reply content of the user that is detected by the user by using a keyboard (for example, "Thank you! "), and the reply content of the user may be displayed in the text input box 404.

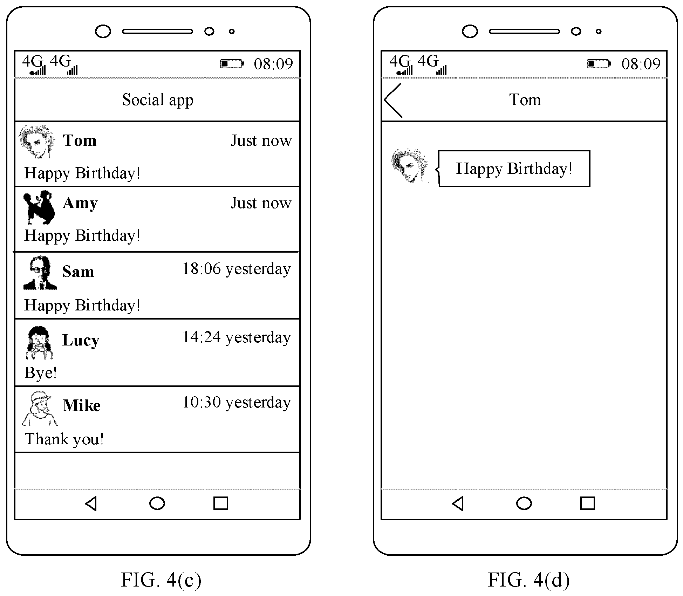

After the notebook computer detects an operation of tapping the control 405 by the user, the notebook computer may send the reply content to the mobile phone. In addition, the message reminder box 401 on the notebook computer may be automatically hidden. For a change of a GUI on the mobile phone, refer to FIG. 4(c) to FIG. 4(f).

Refer to FIG. 4(c). The mobile phone may directly open a display interface of the social app on a lock screen. Historical chat records with the user Tom, the user Amy, a user Sam, a user Lucy, and a user Mike may be sequentially displayed on the display interface in a sequence of message receiving moments.

It should be understood that an answering interface of a video call or a voice call with a friend in some social apps may be directly displayed on the lock screen of the mobile phone. In this embodiment of this application, a (flags) attribute supporting lock screen loading is added to the social app, so that the mobile phone can directly open the display interface of the social app on the lock screen.

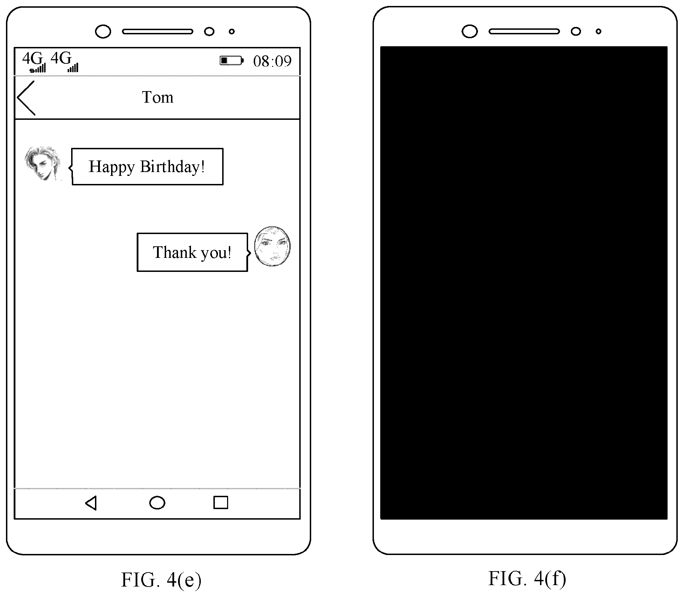

It should be understood that, for FIG. 4(d) and FIG. 4(e), refer to the foregoing descriptions of FIG. 3(d) and FIG. 3(e). For brevity, details are not described herein again.

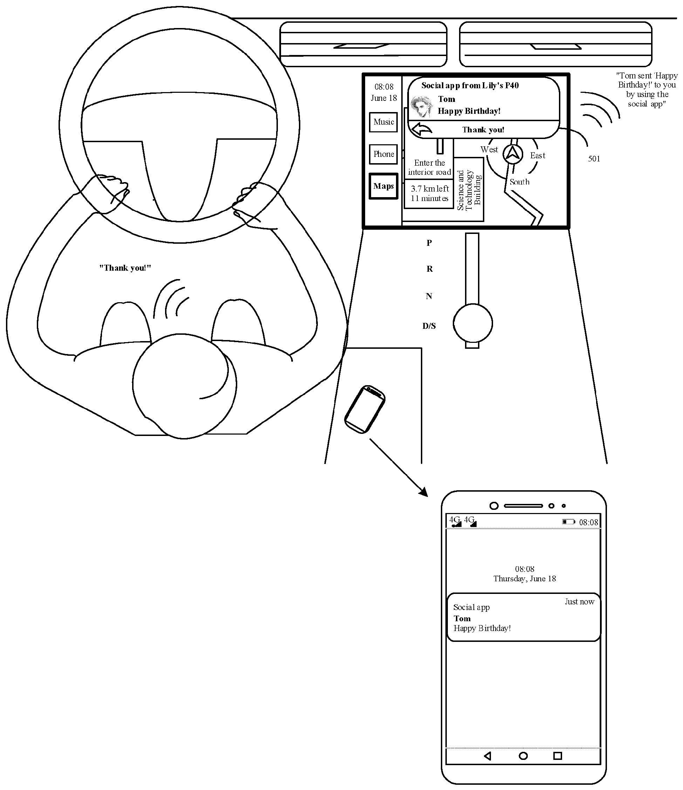

Refer to FIG. 4(f). The mobile phone enters the screen-locked state after completing a real reply to the message.

In an embodiment, after the notebook computer detects the operation of tapping the control 405 by the user, the message reminder box 401 may disappear, and the message reminder box 402 may continue to be displayed on the notebook computer. After a period of time, if the user does not reply to the user Amy on the notebook computer, the message reminder box 402 may be automatically hidden.

In an embodiment, after the mobile phone completes the real reply to the user Tom, prompt information of the message from the user Tom may be automatically hidden on the lock screen, and a prompt of the message from the user Amy may continue to be displayed on the lock screen.

In an embodiment, when detecting the reply content of the user that is detected by the user by using the keyboard, the notebook computer may further automatically enable a camera to collect facial information of the user. When sending the reply content of the user to the user, the notebook computer may further send the collected facial information to the mobile phone. After the mobile phone determines that the facial information collected by the notebook computer matches preset facial information in the mobile phone, the mobile phone may complete the real reply to the message. In addition, because the facial information collected by the notebook computer matches the preset facial information in the mobile phone, the mobile phone may automatically perform an unlock operation and enter a non-screen-locked state. In this way, a reply process shown in FIG. 4(c) to FIG. 4(e) is implemented.

In this embodiment of this application, when the notebook computer sends the rely content of the user to the mobile phone, the notebook computer may further send, to the mobile phone, the facial information of the user that is collected by the notebook computer. The mobile phone may first determine, based on the facial information, whether the reply is made by the user. If the reply is made by the user, the mobile phone completes the real reply to the notification message. Otherwise, the mobile phone may not reply to the notification message. This helps the mobile phone improve protection of user privacy, and improves user experience.

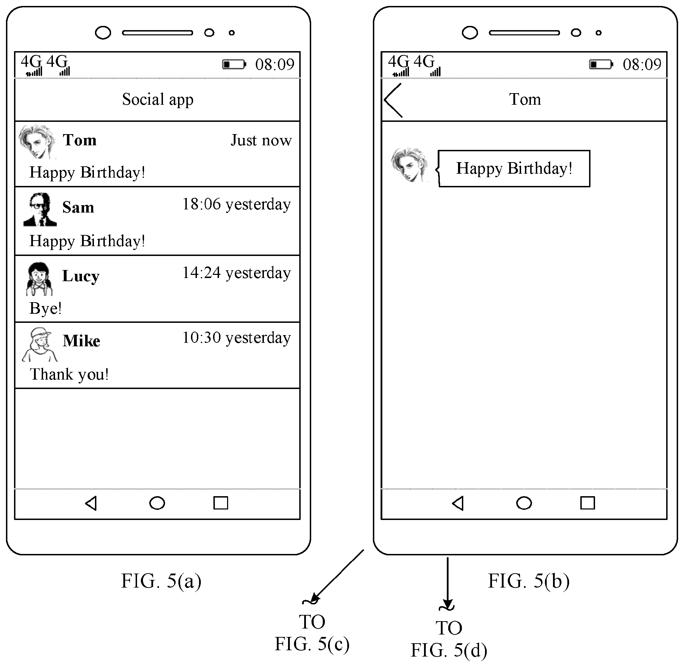

FIG. 5(a) to FIG. 5(d) show another group of GUIs according to an embodiment of this application.

A user is driving a vehicle at this time, and a display on a head unit displays the user being using navigation. A mobile phone is placed by the user in a storage tank of the vehicle.

The mobile phone receives a message (for example, Happy Birthday!) of a social app from a user Tom. In this case, the mobile phone may send the message to the head unit of the user, and the head unit displays a message reminder box 501 through the display. The message reminder box 501 may include a message source (for example, the message is a message of the social app, and the message is from P40 of the user Lily), information about the user who sends the message (for example, "Tom" and an avatar of the user Tom), and content of the message (for example, Happy Birthday!). In addition, the head unit may further prompt the user with "Tom sent 'Happy Birthday!' to you by using the social app" in a voice reminding manner.

Compared with that on the GUI shown in FIG. 3(a) to FIG. 3(f) or FIG. 4(a) to FIG. 4(f), the message reminder box displayed by the display of the head unit may include no sending control. After the head unit prompts the user in the voice reminding manner, the head unit may collect, by using a microphone, reply content of the user. As shown in the figure, the user replies with "Thank you!". In this case, the head unit may display, by using the message reminder box 501, the reply content of the user.

In an embodiment, the head unit may include a digital signal processor (digital signal processing, DSP). The DSP may process voice information, to obtain, through analysis, text content corresponding to the voice information.

In an embodiment, the head unit may include an automatic speech recognition (automatic speech recognition, ASR) module. A main function of the ASR module is to recognize the voice information of the user as text content.

In an embodiment, the message reminder box displayed on the display of the head unit may also include a sending control. After the user taps the sending control, the head unit may send the reply content of the user to the mobile phone. Alternatively, the message reminder box may include no sending control. After the head unit collects voice information "Reply to Tom with 'Thank you!'" of the user by using a microphone, the head unit may send the reply content of the user to the mobile phone.

In an embodiment, a reply button in the message reminder box may be further mapped to a button on a steering wheel. In this way, the user can directly perform voice reply by tapping the button on the steering wheel, to further improving driving safety.

In this embodiment of this application, the content with which the head unit replies to the mobile phone may be voice information or text content.

Refer to FIG. 5(a). After receiving the reply content sent by the head unit, the mobile phone may directly open a display interface of the social app on a lock screen. Historical chat records with the user Tom, a user Sam, a user Lucy, and a user Mike may be sequentially displayed on the display interface in a sequence of message receiving moments.

Refer to the GUI shown in FIG. 5(b). The mobile phone may automatically open a chat interface with the user Tom. The message (Happy Birthday!) sent by the user Tom to the user Lily may be displayed on the chat interface when the chat interface is opened.

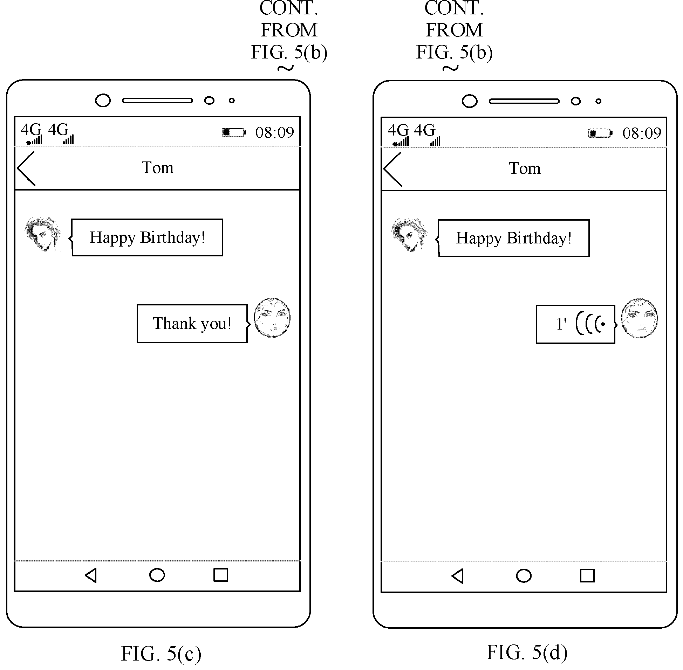

Refer to the GUI shown in FIG. 5(c). The mobile phone may automatically reply to the user Tom with text content corresponding to the voice information. Alternatively, refer to the GUI shown in FIG. 5(d). The mobile phone may reply to the user Tom with the voice information.

In this embodiment of this application, a text-to-voice function may be added to a sink-end device. In a scenario of the head unit, this helps improve safety and convenience when the user uses message notification forwarding, and helps improve user experience.

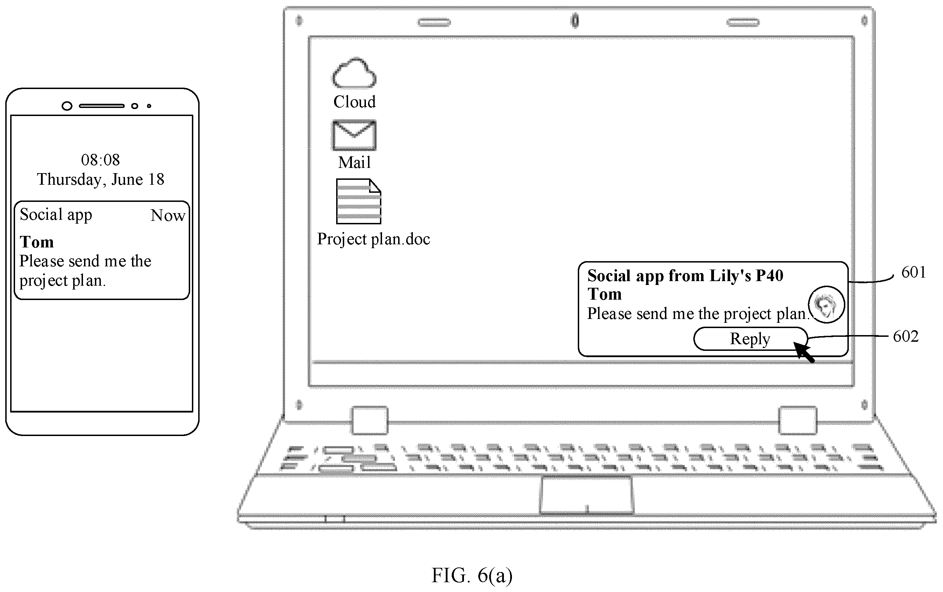

FIG. 6(a) to FIG. 6(f) show another group of GUIs according to an embodiment of this application.

A user is using a notebook computer in a room to work, and a mobile phone is in a screen-locked state and is placed by the user in another room.

Refer to the GUI shown in FIG. 6(a). The mobile phone receives a message (for example, Please send me the project plan) of a social app from a user Tom. In this case, the mobile phone may send the message to a notebook computer on which a user is focusing, and the notebook computer may display a message reminder box 601. The message reminder box 601 includes a message source (for example, the message is a message of the social app, and the message is from P40 of the user Lily), information about the user who sends the message (for example, "Tom" and an avatar of the user Tom), content of the message (for example, Please send me the project plan), and a control 602.

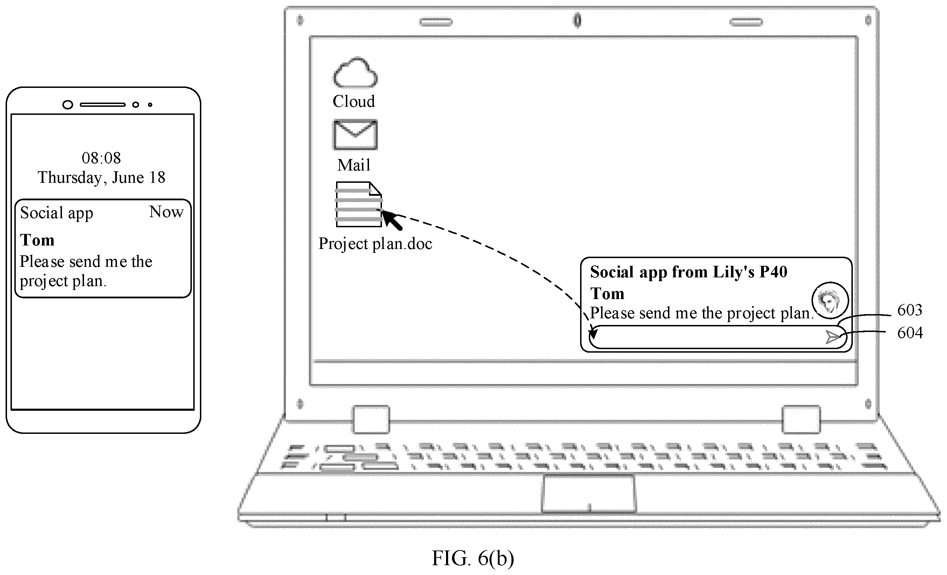

Refer to the GUI shown in FIG. 6(b). The notebook computer may display an input box 603 and a sending control 604 after the notebook computer detects an operation of tapping the control 602 by the user. The notebook computer may send the project plan (which is a Word document) to the mobile phone after the notebook computer detects an operation of dragging the project plan (which is a Word document) on a desktop of the notebook computer to the input box 603 by the user. Alternatively, the notebook computer may send the project plan (which is a Word document) to the mobile phone after the notebook computer detects an operation of dragging the project plan (which is a Word document) on a desktop of the notebook computer to the input box 603 by the user and tapping the control 604 by the user.

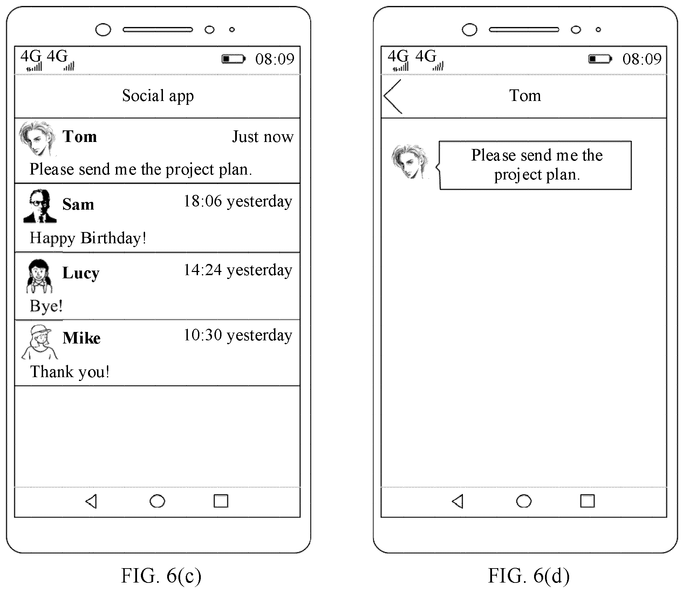

For a display interface of the mobile phone after the mobile phone receives the project plan (which is a Word document) sent by the notebook computer, refer to FIG. 6(c) to FIG. 6(f).

Refer to the GUI shown in FIG. 6(c). The mobile phone may directly open a display interface of the social app on a lock screen. Historical chat records with the user Tom, a user Sam, a user Lucy, and a user Mike may be sequentially displayed on the display interface in a sequence of message receiving moments.

Refer to the GUI shown in FIG. 6(d). The mobile phone may automatically open a chat interface with the user Tom. The message (Please send me the project plan) sent by the user Tom to the user Lily may be displayed on the chat interface when the chat interface is opened.

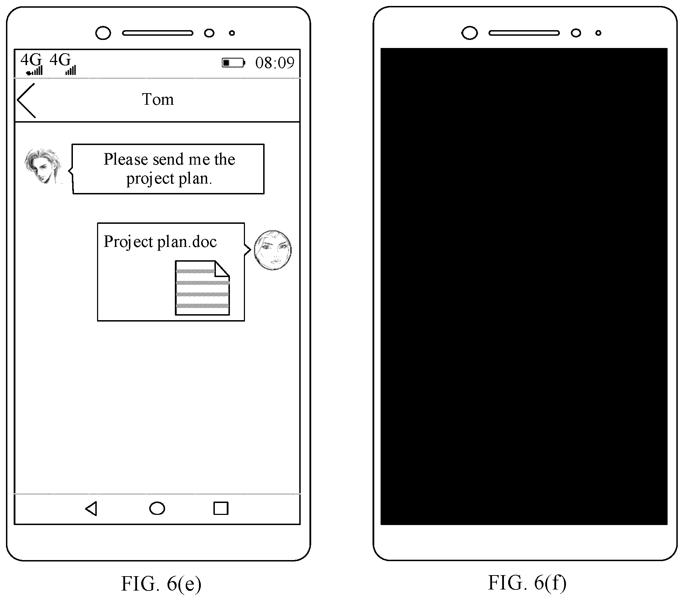

Refer to the GUI shown in FIG. 6(e). The mobile phone may send the project plan (which is a Word document) to the user Tom. After completing reply, the mobile phone may return to a state before the notification message is received.

Refer to FIG. 6(f). The mobile phone enters the screen-locked state after completing a real reply to the message.

In this embodiment of this application, a sink (sink)-end device may send an attachment to a source (source)-end device. The attachment may be a file of a type, for example, a picture, a video, audio, or a document. The user can complete interaction similar to that of an email (email) in a notification. This improves safety and convenience when the user uses message notification forwarding, and helps improve user experience.

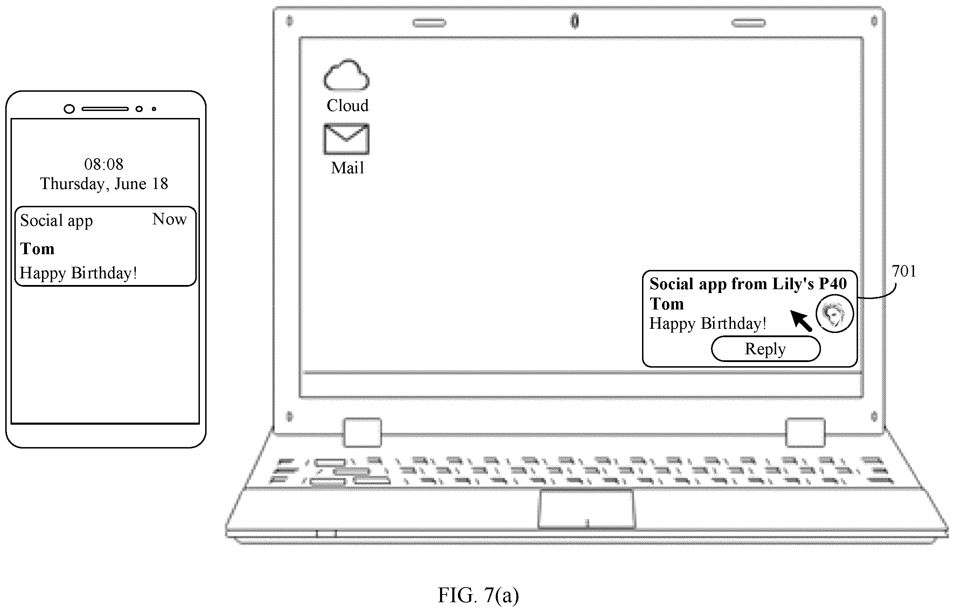

FIG. 7(a) to FIG. 7(d) show another group of GUIs according to an embodiment of this application.

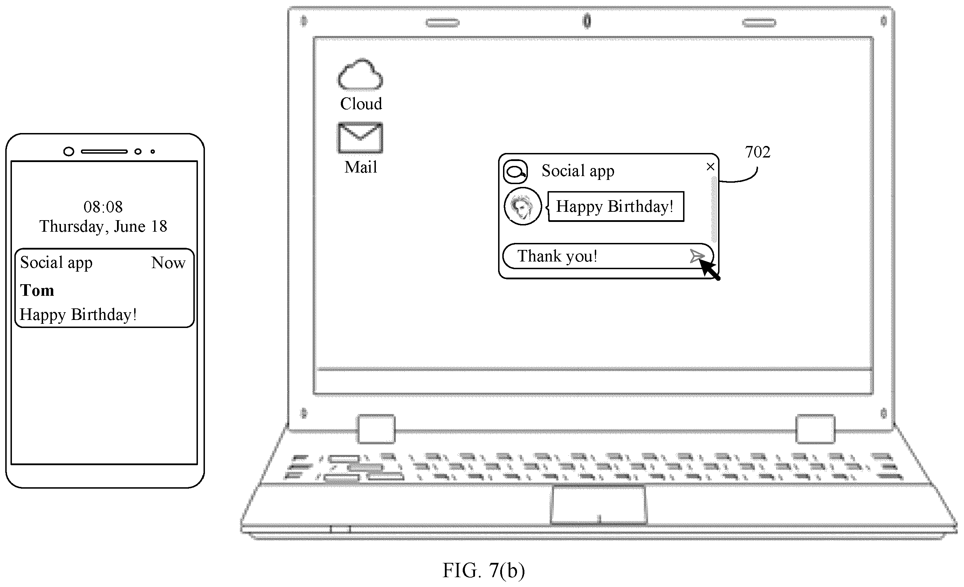

Refer to the GUI shown in FIG. 7(a). A mobile phone receives a message (for example, Happy Birthday!) of a social app from a user Tom. In this case, the mobile phone may send the message to a notebook computer on which a user is focusing, and the notebook computer may display a message reminder box 701. After detecting an operation of tapping the message reminder box 701 by the user, the notebook computer may display the GUI shown in FIG. 7(b).

Refer to the GUI shown in FIG. 7(b). After the notebook computer detects that the user taps a location in the message reminder box, the notebook computer may display another message reminder box 702. Compared with the message reminder box 701, the message reminder box 702 better conforms to a display style of the social app on a PC end. After detecting an operation of entering reply content (for example, "Thank you! ") in an input box of the message reminder box 702 and tapping a sending control by the user, the notebook computer may send the reply content of the user to the mobile phone.

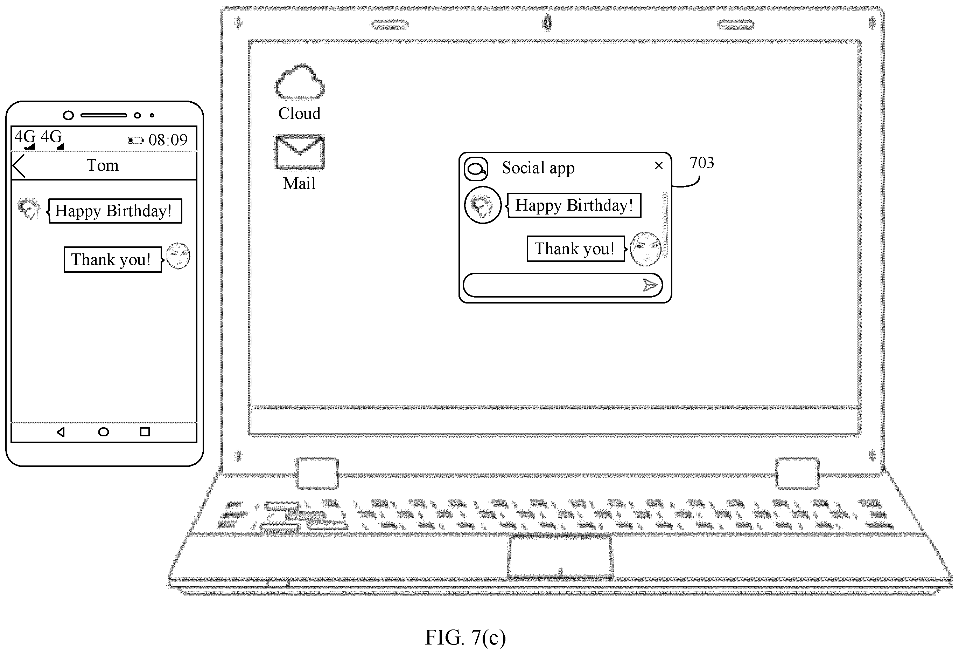

Refer to the GUI shown in FIG. 7(c). After receiving the reply content of the user, the mobile phone may automatically open a chat interface with the user Tom, to automatically complete a real reply to the message. In addition, the notebook computer may continue to display a message reminder box 703. The message reminder box 703 may include the content with which the user just replied (for example, "Thank you!").

It should be understood that, after the operation of tapping the reply control 403 on the GUI shown in FIG. 4(b) by the user, the notebook computer can detect the reply content entered by the user, and send the reply content to the mobile phone after detecting that the user taps the sending control 404. When the reply content is sent to the mobile phone, the message reminder box 401 may automatically disappear. After the mobile phone receives a message next time, the notebook computer may continue to display the message reminder box. However, after replying to the message, the user may always keep the message reminder box on the GUI shown in FIG. 7(b). The notebook computer may close the message reminder box 702 after the notebook computer detects an operation of closing the message reminder box 702 by the user.

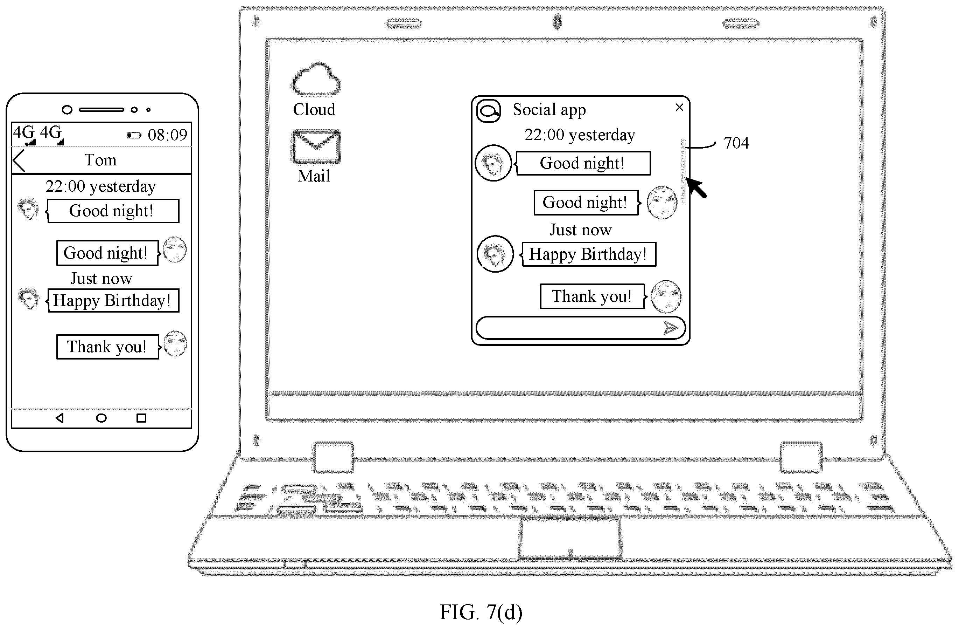

In an embodiment, refer to the GUI shown in FIG. 7(d). The message reminder box 702 further includes a scroll bar 704. After the notebook computer detects that the user slides the scroll bar 704 upward by using a mouse, the notebook computer may request, from the mobile phone, a historical chat record with the user Tom. In this way, more chat content can be displayed by using the message reminder box 703.

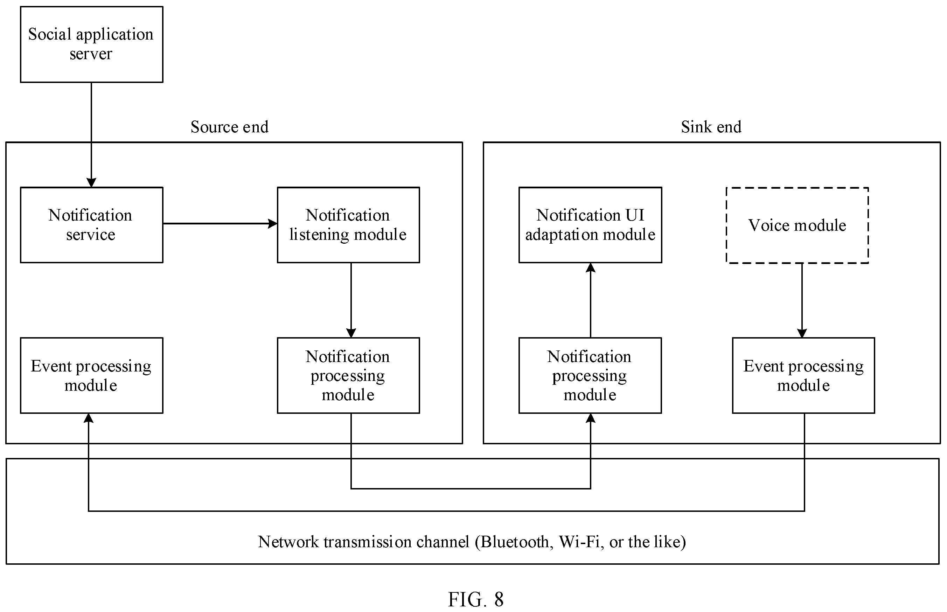

The following describes an internal implementation process of a source (source) end and a sink (sink) end according to an embodiment of this application with reference to FIG. 8.

A notification service is used to receive a message sent by a social application server. For example, when a user Tom sends a message to a user Lily by using a device A, the device A first sends content of the message and identification information of a social application account of the user Lily to the social application server. The social application server stores information about a device logged in with the social application account of the user Lily (for example, a device B of Lily). The social application server may send a corresponding message to the device B of the user Lily based on the identification information of the social application account of the user Lily. A notification service in the device B may be used to receive the message and information about the user Tom that are sent by the server.

A notification listening module is configured to register a notification listening service with a system, and obtain the message received by the notification service in real time. When a social application server sends a notification message, the notification listener may obtain the notification message body. The notification message body includes a header, a notification ID attribute, a notification channel attribute, message content, and the like. The header is used to determine an application app to which the notification message belongs, and the notification ID attribute and the notification channel attribute may be used to find a corresponding notification message. The message content may include text information of the message (for example, "Happy Birthday!" shown in FIG. 3(a)).

Notification processing module of the source end: The notification processing module of the source end adds a "quick reply" attribute to the message when the source-end device determines that a user currently does not focus on a source-end device and the message is a message that can be forwarded to another electronic device.

The source end may store a white list of applications. The source end can forward only a message from an application in the trustlist in a cross-device manner when receiving the message. For example, all third-party apps that support a drag event response may be added to the whitelist. The source end may test an application to determine whether the application supports the drag event response. During the test, a view system at an application framework layer may send a Drag and Drop event and randomly generated content to an application at an application layer. After the application receives the Drag and Drop event and the randomly generated content, in response to the Drag and Drop event, the application is started in the foreground, a chat interface with a contact is randomly opened, and the randomly generated content is replied at a corresponding location on the chat interface. The reply being successful indicates that the application supports the drag event response of the system. The reply being unsuccessful indicates that the application does not support the drag event response of the system.

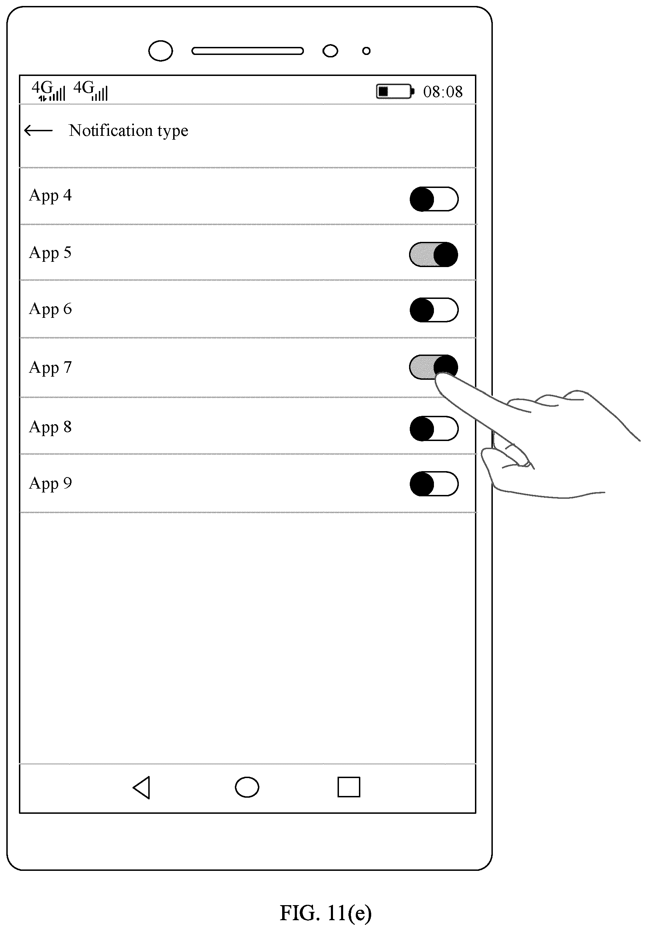

In an embodiment, the source end may alternatively determine, based on a setting of the user, whether to forward the message in the cross-device manner. For example, as shown in FIG. 11(e), the user may set in advance an app corresponding to a message that can be forwarded in the cross-device manner. For example, the user may set that the notification messages of the app 5 and the app 7 are forwarded to another device, and notification messages of an app 4, the app 6, an app 8, and an app 9 are not forwarded to the device.

In this embodiment of this application, a notification message body may include a notification ID attribute and a notification channel attribute of a notification message. The notification ID attribute may be used to distinguish notification ID attributes sent by different users. For example, if the user has a plurality of contacts in a third-party app, the plurality of contacts may be respectively distinguished by using different notification ID attributes. Table 1 shows a distinguishing manner.

**Table 1 Correspondence between a contact and a notification ID attribute corresponding to the contact**

| Contacts | Notification ID attribute |
|---|---|
| Contact 1 | ID 1 |
| Contact 2 | ID 2 |
| Contact 3 | DI 3 |
| ... | ... |

Character strings in the notification channel attribute may be used to distinguish different message types. For example, Table 2 shows a correspondence between different message types and character strings in notification channel attributes.

**Table 2 Correspondence between a message type and a character string in a notification channel attribute**

| Message type | Character string in the notification channel attribute |
|---|---|
| Text | Character string 1 |
| Voice | Character string 2 |
| Video | Character string 3 |
| File | Character string 4 |
| ... | ... |

A corresponding notification message may be determined by using the notification ID attribute and the notification channel attribute. For example, for the GUI shown in FIG. 4(a) to FIG. 4(f), the user Tom and the user Amy separately send two notification messages, and the two notification messages may be distinguished by using notification ID attributes. For another example, two notification messages of different message types sent by Tom may be distinguished by using notification channel attributes. Different notification messages of a same message type sent by a same user may not be distinguished, or may be distinguished by using other identification information.

It should be understood that, descriptions of notification ID attributes and notification channel attributes of different applications may be different. The foregoing describes only the notification ID attribute and the notification channel attribute that are defined in some applications. This embodiment of this application is not limited thereto.

The notification processing module of the source end may add a "quick reply" flag attribute to the message body of the notification processing module. The sink end may add a reply control to a message reminder box when determining that the notification message body carries the "quick reply" flag attribute. The sink end may display a text input box and the reply control after detecting that the user taps the reply control. The source end may add message content and a "quick reply" flag attribute to a notification message body sent to the sink end when sending the notification message body.

In an embodiment, the source end may further add a notification ID attribute and/or a notification channel attribute to the notification message body. The purpose of carrying the notification ID attribute and the notification channel attribute is that the sink end sends reply content of the user for the notification message, the notification ID attribute, and the notification channel attribute together to the source end after obtaining the reply content, so that the source end can determine a notification message for which the reply content is made.

For example, the source end may add the notification message body to a BLE data packet and send the BLE data packet to the sink end. The BLE data packet includes a protocol data unit (protocol data unit, PDU). The notification message body may be carried in a service data (service data) field in the PDU, or may be carried in a manufacturer specific data (manufacturer specific data) field in the PDU. For example, a payload (payload) of the service data field may include a plurality of bits. The plurality of bits include an extensible bit. The sink end and the source end may agree on content of an extensible bit. The source end may encode the notification message body by using an encoding scheme, for example, GBK or ISO8859-1, and add encoded information to one or more extensible bits.

Notification processing module of the sink end: The notification processing module of the sink end may parse the notification message body after receiving the notification message body, to obtain the content and the "quick reply" flag attribute in the notification message. For example, if the source end adds the notification message body to the BLE data packet and sends the BLE data packet to the sink end, after receiving the BLE data packet, the sink end may decode the BLE data packet by using a corresponding decoding scheme, to obtain the notification message body.

Notification UI adaptation module: After the notification processing module of the sink end recognizes the "quick reply" flag attribute in the notification, the notification UI adaptation module adapts to, for sink ends using different operating systems, system interfaces corresponding to the systems, and supports a "quick reply" input box, UI presentation, a user interaction response, and the like.

For example, if the sink end is a device using an Android system, the sink end may provide notificationManager, to draw the message reminder box. The message reminder box includes the notification content in the notification message body, a reply control drawn by notificationManager, and the like. For example, as shown in FIG. 3(a), the tablet computer may display the reply control 302 in the message reminder box after receiving a message body sent by the mobile phone. As shown in FIG. 3(b), the tablet computer may display the input box 303 and the sending control 304 after detecting the operation of tapping the control 302 by the user.

After detecting that the user enters the reply content and taps the sending control, the sink end may obtain, through a callback interface getResultsFromIntent(), the content entered by the user. The getResultsFromIntent() may be used to establish an association between the sending control and the text input box. After the sink end detects an operation of tapping the reply control by the user, the sink end is triggered to obtain the content in the text input box. In this embodiment of this application, the callback interface may be registered with different systems. In this way, the notification processing module can obtain the reply content of the user through the callback interface when the sink end detects the reply content of the user. After detecting that the user enters the reply content in the input box and detecting that the user taps the sending control, the sink end may be triggered to send the reply content of the user to the source end.

Event processing module of the sink end: When recognizing that the user replies to a notification message, the event processing module of the sink end packs an action response event and reply content of the user together into a notification message body. The notification message body may be in a same encapsulation format as the notification message sent by the source end to the sink end, to facilitate parsing by the source end.

For example, the sink end may add the notification message body to a BLE data packet and send the BLE data packet to the source end. The BLE data packet includes a PDU. The notification message body may be carried in a service data field in the PDU, or may be carried in a manufacturer specific data field in the PDU. For example, a payload of the service data field may include a plurality of bits. The plurality of bits include an extensible bit. The sink end and the source end may agree on content of an extensible bit. The sink end may encode the notification message body by using an encoding scheme, for example, GBK or ISO8859-1, and add encoded information to one or more extensible bits.

In an embodiment, if the notification message body sent by the source end to the sink end carries the notification ID attribute and the notification channel attribute, the sink end may add the notification ID attribute, the notification channel attribute, the action response event, and the reply content of the user to the notification message. If the notification message body sent by the source end to the sink end carries no notification ID attribute and notification channel attribute, the notification message body sent by the sink end to the source end may alternatively carry no notification ID attribute and notification channel attribute.

Event processing module of the source end: The event processing module of the source end parses the notification message body sent by the sink end, to obtain the action response event, the notification ID attribute, the notification channel attribute, and the reply content of the user. The source end may determine, by using the action response event, that the sink end replies to the notification message, and determine, by using the notification ID attribute and the notification channel attribute, a notification message to which a reply is made. Then, a real reply to the notification message is completed by using the following process.

### (1) Open a display interface of a social app.

If the source end is in a screen-locked state, processing is performed in the following several manners.

### Manner 1

The source end may first determine, based on a header of the notification message body, an app to which the reply content is specific. If the app provides an application programming interface (application programming interface, API) to reply to the message, the app may directly complete, after obtaining the reply content of the user, the real reply to the notification message through the API provided by the app. For example, a Messages application provides an API "sendTextMessage" for completing a real reply to a notification message. After obtaining reply content, the source end may first determine, by using a header in the notification message body, that the reply content is reply content for the Messages application. Messages provides the API to reply to the notification message. Therefore, the source end can determine, by using a notification ID attribute and a notification channel attribute, a notification message to which a reply is made. Then, the source end can directly complete the real reply to the notification message through "sendTextMessage".

It should be understood that, for the reply manner in Manner 1, a process of replying to the message is internally implemented by the source end, and the process is imperceptible to the user. If the app provides no API to reply to the message, the app may complete a reply in Manner 2 or Manner 3 by using a drag event.

### Manner 2

If the app supports a flags attribute for lock screen loading, the source end may directly load a corresponding display interface on a lock screen. For example, a voice call request or a video call request of WeChat is directly displayed on the lock screen. Then, step (2) is performed to complete the reply to the message by using the drag event.

### Manner 3

A reply manner in Manner 3 may be also referred to as a cross-device unlocking solution. In Manner 3, the sink end may complete collecting identity authentication information of the user. For example, the sink end may obtain password information used by the user to unlock the source end, for example, identity authentication information, for example, a digital password, a fingerprint password, iris information, and a facial feature. Then, the sink end may add the password information to the notification message body and send the notification message body to the source end, so that the source end determines whether to unlock the device. If the source end determines, based on the password information, to unlock the device, the source end may first unlock the device to enter a non-screen-locked state, and then perform step (2) to complete the reply to the message by using the drag event.

### (2) Complete the reply by using the drag event.

In response to the action response event, the source end may determine that the sink end detects an operation of replying to the notification message by the user. The source end may determine a corresponding app based on the header of the notification message body, start the app in the foreground, and find a corresponding notification message by using the notification ID attribute and the notification channel attribute. A view system of the source end may send a Drag and Drop event and the reply content to the corresponding app. In response to the Drag and Drop event, the app uses PendingIntent in the notification message to open a chat interface with a specific contact, to reply to the notification message. In this case, the real reply to the notification message is completed. The view system may further send a content attribute of the reply content to the corresponding app when sending the Drag and Drop event and the reply content to the corresponding app. The content attribute may be used to indicate a type of the reply content (for example, a text, a picture, a voice, a video, or a file). The app may indicate, based on the type of the reply content, a three-dimensional graphics processing library (OpenGL ES) to draw different display interfaces. For example, text content may be directly displayed at a reply location after the chat interface with the specific contact is opened. For another example, for voice information, after the chat interface with the specific contact is opened, duration of the voice and a control for listening to the voice may be displayed (where when the source end detects an operation of tapping the control by the user, content of the voice may be played). For another example, for video information, after a chat interface with a contact is opened, the first frame of image in the video may be displayed, and a play control is displayed (where after the source end taps the play control, content of the video may be played).

### (3) Restore the source end to an original state.

After completing the reply, the source end hides the interface of the app to return to a display interface before the social app is started. A screen of the device is locked again if the screen of the source end is originally locked. By restoring the original state of the device, a quick reply function is imperceptible to the user, to further improve user experience.

In an embodiment, in the internal implementation process of the source end and the sink end shown in FIG. 8, the sink end may further include a voice module. For example, on the GUI shown in FIG. 5(a) to FIG. 5(d), the head unit may include a voice module. After the mobile phone sends the received message to the head unit, the head unit may convert text information corresponding to the message into voice information by using the voice module, and remind the user of the message in a voice reminding manner.

In addition, a microphone of the sink end may obtain, through pickup, content with which the user replies by using a voice. The sink end may encapsulate the content with which the user replies by using the voice into the notification message body, and send the notification message body to the source end. The voice module may also convert the content with which the user replies by using the voice into text information and send the text information to the source end. Alternatively, the voice module may not convert the content with which the user replies by using the voice into text information, but directly adds the content with which the user replies by using the voice to the notification message body. In this way, the source end determines whether to convert the content with which the user replies by using the voice into the text information.

Currently, many automotive central consoles are equipped with large screens, use intelligent systems, and provide rich entertainment functions and driving fun. A smart device can be well connected to a head unit by using various interconnection technologies. Similarly, a notification on the smart device can be synchronized to the head unit in real time. Converting content of the notification into a voice for broadcasting for interaction is more user-friendly, to meet a safety requirement of the head unit. In addition, this supports the user in replying by using the voice, and also avoids a process in which the user replies to a message on a display of the head unit, thereby improving user experience.

In an embodiment, the sink end may further support an attachment reply function.

For example, on the GUI shown in FIG. 6(a) to FIG. 6(f), the user may send the attachment (which is the project plan) to the user Lily on the notebook computer.

The sink end may add information about an attachment to the notification message body when sending the notification message body to the source end. Alternatively, the sink end may add path information of an attachment on the sink end to the notification message body. The source end may request the attachment on a path from the sink end when the user taps the attachment on the source end. In this way, the sink end sends the attachment to the source end through a network transmission channel.

It should be understood that the sink end may also send the content with which the user replies by using the voice or a file to the source end by using a BLE data packet. For a specific sending manner, refer to the descriptions in the foregoing embodiment. For brevity, details are not described herein again.

The following describes in detail an implementation process of the GUI shown in FIG. 7(a) to FIG. 7(d).

On the GUI shown in FIG. 7(a), the notebook computer may send a request to the mobile phone after the notebook computer detects the operation of tapping the message reminder box 701 by the user. The request is used to request configuration information of an interface element.

For example, the request may be carried in a BLE data packet and the BLE data packet is sent to the mobile phone. The BLE data packet includes a PDU. The request may be carried in a service data field in the PDU, or may be carried in a manufacturer specific data field in the PDU. For example, a payload of the service data field may include a plurality of bits. The plurality of bits include an extensible bit. The mobile phone and the notebook computer may agree on content of an extensible bit. For example, when an extensible bit being "1"indicates to request the configuration information of the interface element.

A source end (for example, the mobile phone) may determine one or more UI interface elements by using an integrated development environment (integrated development environment, IDE) tool, and generate an extensible markup language (extensible markup language, XML) file.

The XML file includes a UI interface background, a UI element on the source end, and a size (for example, a UI element displayed on a sink end is twice the UI element on the source end) and a location of the UI element. The location of the UI element may include a direction relationship between the UI element, a control added to the sink end, and a text input box.

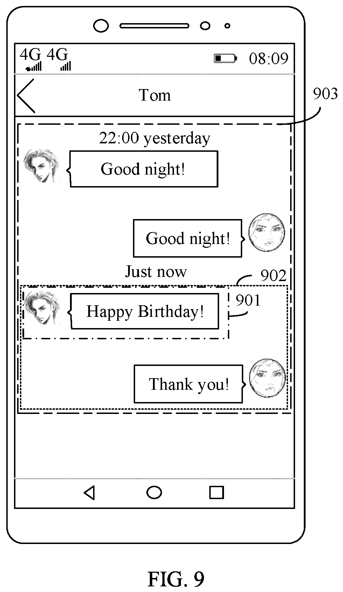

For example, FIG. 9 shows a chat interface displayed on the source end. The source end may capture a UI element 901 on the chat interface. The source end may further determine a background (for example, white) of a chat interface drawn on the sink end, a control (for example, a sending control) added to the sink end, and locations of a text input box and the UI element. For example, the text input box may be located at a middle location right below the UI element, and the sending control may be located in a lower right corner of the UI element.

For example, the source end may add the XML file to a BLE data packet and send the BLE data packet to the sink end. The request may be carried in a service data field in a PDU, or may be carried in a manufacturer specific data field in a PDU. For example, a payload of the service data field may include a plurality of bits. The plurality of bits include an extensible bit. The source end may encode the XML file by using a corresponding encoding technology, and add encoded information to one or more extensible bits. The sink end may obtain the XML file by decoding the information on a corresponding bit.

The sink end may restore an interface based on the XML file. The sink end may draw a UI interface based on the UI interface background and the size and the location of the UI element that are included in the XML file. As shown in FIG. 7(b), the notebook computer may draw the message reminder box 702.

After the notebook computer detects the operation of tapping the sending control by the user, the notebook computer may send the reply content to the mobile phone, and the mobile phone completes a real reply to the message. In this case, the notebook computer may request a new XML file from the mobile phone again, and the mobile phone may send the new XML file to the notebook computer again. The XML file may include a UI element 902. In this way, the notebook computer may draw, based on the UI element 902 in the XML file, the message reminder box shown in FIG. 7(c). It should be understood that, for a specific process in which the notebook computer sends the reply content to the mobile phone, the notebook computer may request the new XML file from the mobile phone again, and the mobile phone sends the new XML file to the notebook computer, refer to the descriptions in the foregoing embodiment. For brevity, details are not described herein again.

In an embodiment, when the notebook computer detects that the user slides the scroll bar 704, the notebook computer may request more UI elements from the mobile phone. For example, after receiving the request, the mobile phone adds a UI element 903 to an XML file and sends the XML file to the notebook computer. The notebook computer may draw, based on the XML file, the message reminder box shown in FIG. 7(d).

In this embodiment of this application, the sink end may restore the UI element in combination with a dupwight control. The control may be combined with a local control (for example, a button control, a text control, or a list control) of the sink end for drawing a message reminder window.

The following describes in detail another implementation process of the GUI shown in FIG. 7(a) to FIG. 7(d).

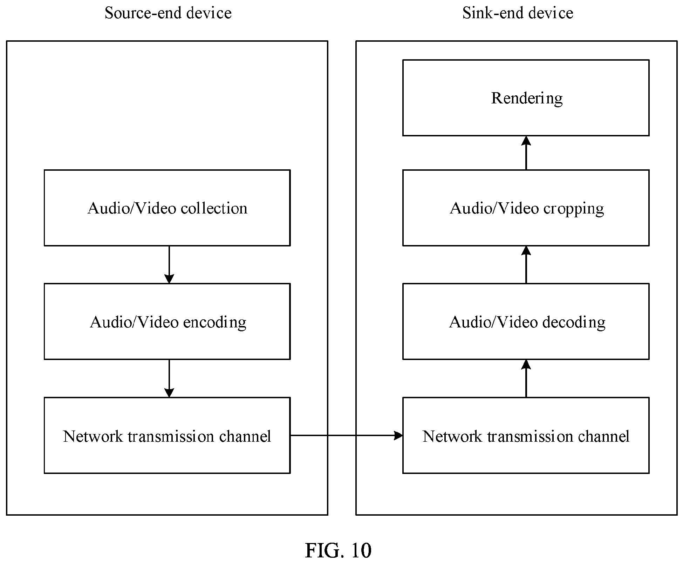

FIG. 10 shows a process of reproducing a source-end interface on a sink end through audio and video collection. A source end may sample an entire display interface on the source end based on a specific sampling frequency (for example, 60 Hz), perform data encoding on sampled data and location information of a chat interface on the source-end interface, and send encoded data to the sink end. The sink end first decodes the data sent by the source end. The sink end crops decoded audio and video data based on the location information of the chat interface, to perform image rendering. In this way, a mirror of the chat interface on the source end may be obtained on the sink end. The sink end may further add a button control (for example, a sending control) and a text input box after the sink end obtains cropping through cropping and performs image rendering.

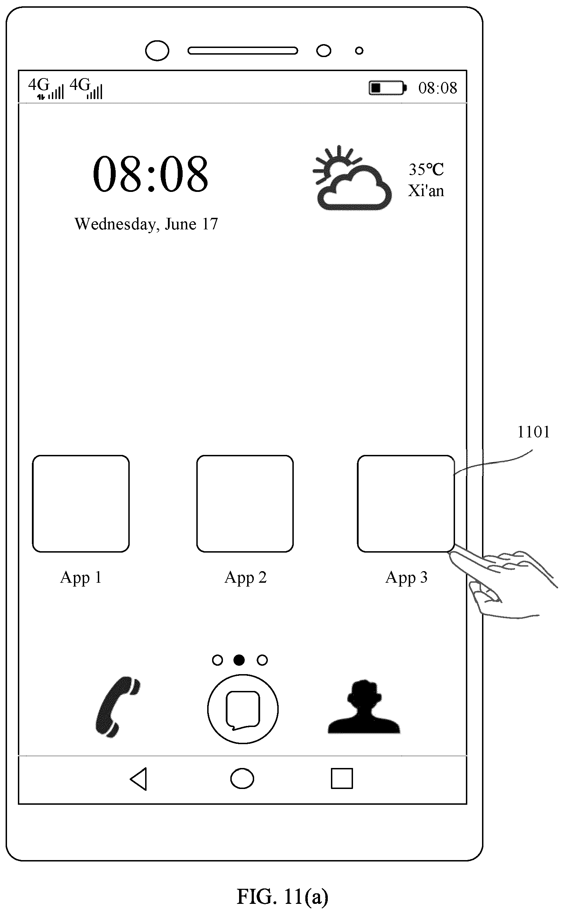

FIG. 11(a) to FIG. 11(e) show another group of GUIs according to an embodiment of this application.

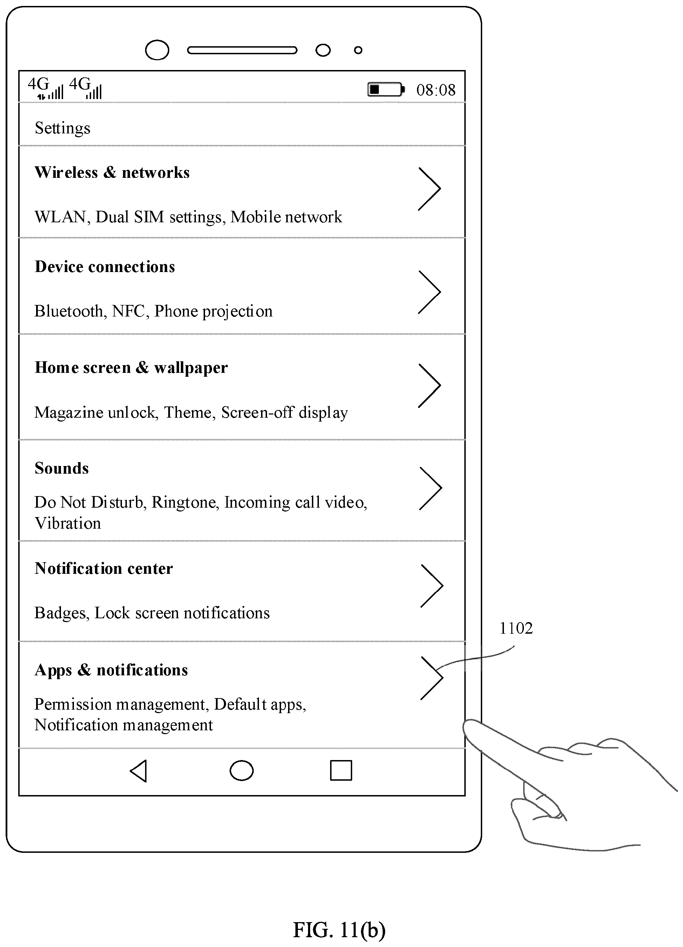

Refer to the GUI shown in FIG. 11(a). The GUI is a home screen of a mobile phone. The GUI includes a plurality of application icons, that is, icons of a plurality of applications (for example, an app 1, an app 2, and an app 3). After detecting an operation of tapping an icon 1101 on the home screen by the user, the mobile phone may start to set a related function of the mobile phone, and display the GUI shown in FIG. 11(b).

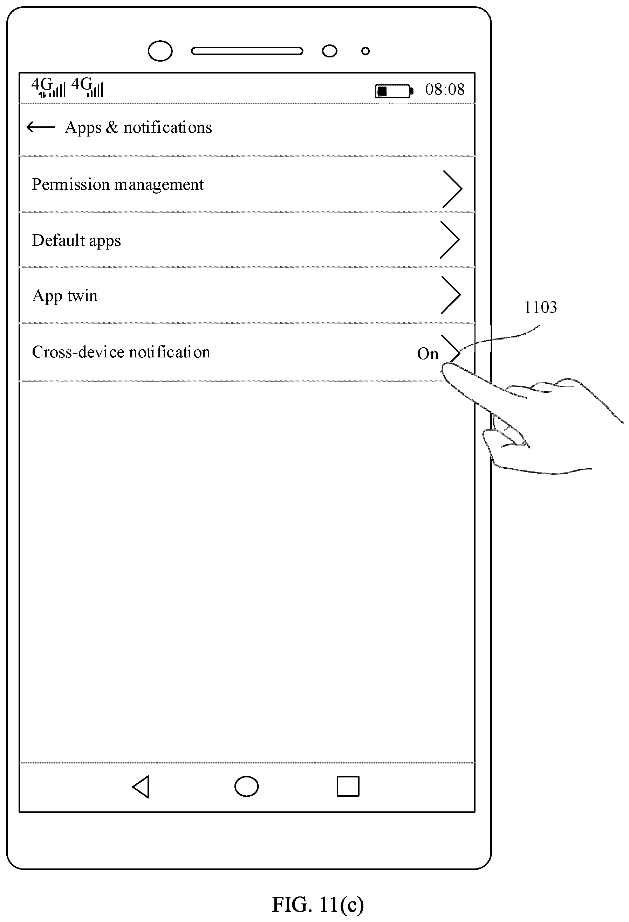

Refer to the GUI shown in FIG. 11(b). The GUI is a setting interface of the mobile phone. The GUI includes a plurality of function options. The plurality of function options include Wireless & networks, Device connections, Home screen & wallpaper, Sounds, Notification center, Apps & notifications, and the like. The user may set functions such as Permission management, Default apps, and Notification management by using Apps & notifications. After detecting an operation of tapping the "Apps & notifications" function 1102 by the user, the mobile phone displays the GUI shown in FIG. 11(c).

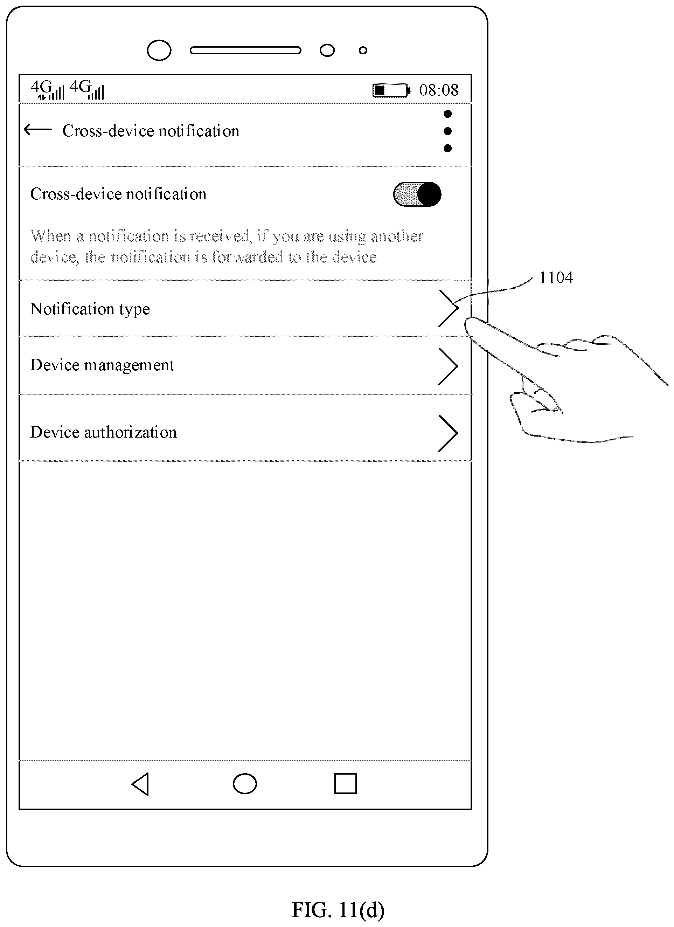

Refer to the GUI shown in FIG. 11(c). The GUI is a setting interface of the "Apps & notifications" function of the mobile phone. The GUI includes a plurality of function options of Wireless & networks. The plurality of function options include Permission management, Default apps, App twin, Cross-device notification, and the like. After detecting an operation of tapping the "Cross-device notification" function 1103 by the user, the mobile phone displays a GUI shown in FIG. 11(d).

Refer to the GUI shown in FIG. 11(d). The GUI is a setting interface of the "Cross-device notification" function of the mobile phone. The GUI includes a plurality of function options of Cross-device notification. The plurality of function options includes a "Cross-device notification" on/off control, Notification type, Device management, and Device authorization. The "Cross-device notification" on/off control includes a function description "When a notification is received, if you are using another device, the notification is forwarded to the device" of Cross-device notification. When the mobile phone detects an operation of tapping Notification type 1104 by the user, the mobile phone may display the GUI shown in FIG. 11(e).

Refer to the GUI shown in FIG. 11(e). The GUI is a setting interface of Notification type of the mobile phone. The user may select, from Notification type shown in FIG. 11(e), a notification message of an application that the user wants to forward. For example, the user may select types of notification messages of an app 5 and an app 7 as the notification messages that the user wants to forward.

In this embodiment of this application, the user can select, by using a setting option, the notification message of the application that the user wants to forward. This can avoid harassment caused by forwarding an unnecessary notification message to the user.

In an embodiment, before sending the notification message to the sink end, the source end determines a device that is set by the sink end for the user to receive and forward the notification message; or before sending the notification message to the second electronic device, the source end determines that a login account on the source end is associated with a login account on the sink end.

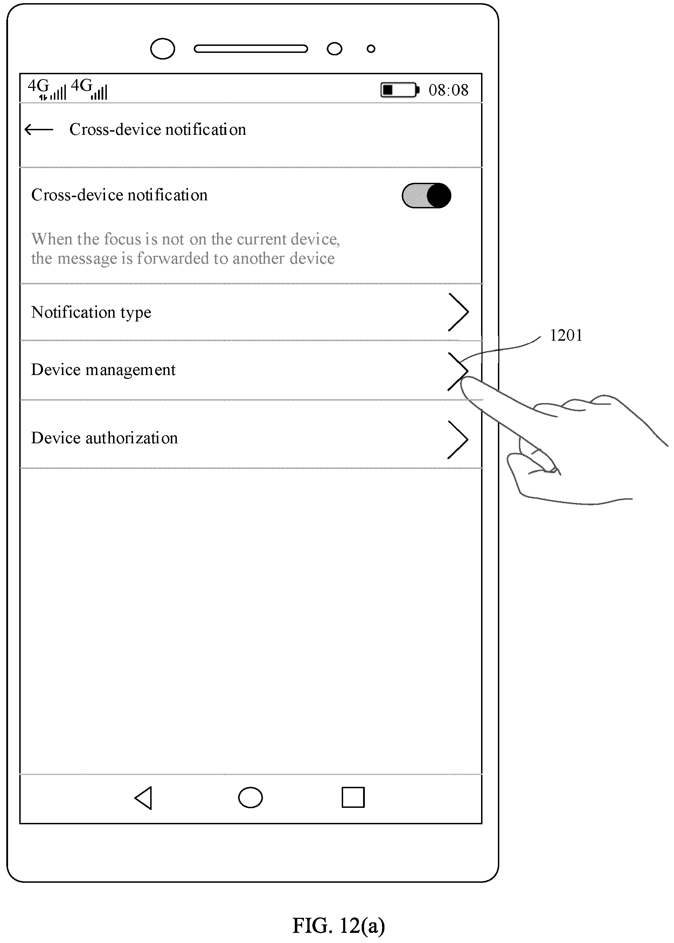

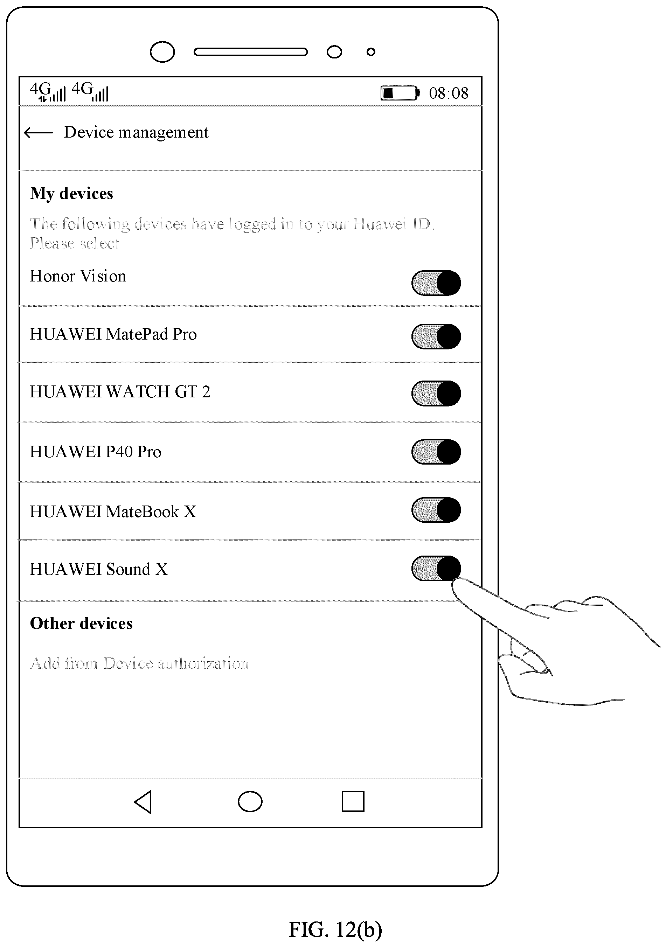

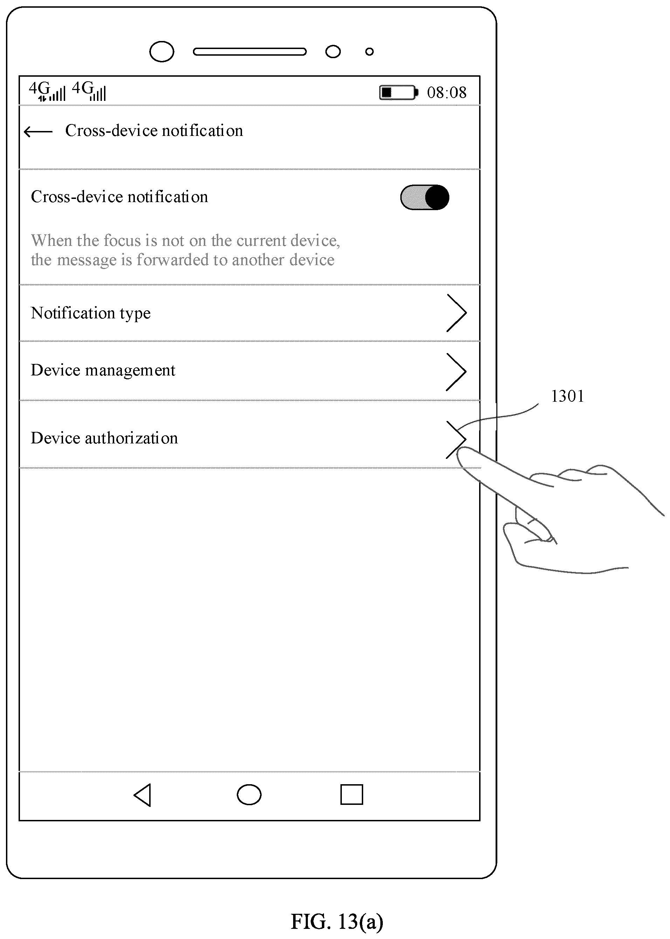

With reference to FIG. 12(a) and FIG. 12(b) and FIG. 13(a) to FIG. 13(d), the following describes a process in which a source end (for example, a mobile phone) selects a sink end for receiving.

After the mobile phone detects that a user taps Device management 1201 shown in FIG. 12(a), the mobile phone may display a GUI shown in FIG. 12(b).

Refer to the GUI shown in FIG. 12(b). The GUI is a display interface of the "Device management" function. Device management includes My devices and Other devices. My devices include a device logged in with a same Huawei ID as the mobile phone. For example, My devices include a tablet computer "HUAWEI MatePad Pro", a smartwatch "HUAWEI WATCH GT 2", another mobile phone "HUAWEI P40 Pro", a notebook computer "HUAWEI MateBook X", and a smart speaker "HUAWEI Sound X". After the mobile phone selects all the foregoing devices, the mobile phone may forward a notification message to the foregoing devices.

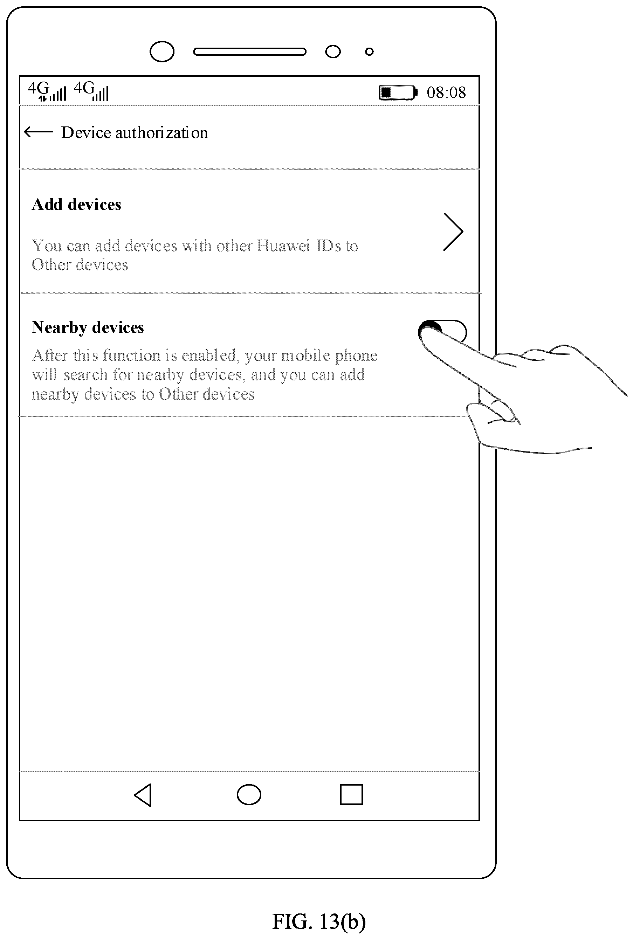

The user may select, as an object to which the notification message is forwarded, the device logged in with the same Huawei ID, or may select, as an object to which the notification message is forwarded, a device logged in with a different Huawei ID. For example, after the mobile phone detects that the user taps Device authorization 1301 shown in FIG. 13(a), the mobile phone may display a GUI shown in FIG. 13(b).

Refer to the GUI shown in FIG. 13(b). The GUI is a display interface of the "Device authorization" function. The display interface includes an option of Add devices and an option of Nearby devices. A description of Add devices is "You may add, to Other devices, a device logged in with another Huawei ID". For example, the user may add a Huawei ID of another family member in a family group. Then, a device logged in with the Huawei ID of the another family member may appear in the Other devices shown in FIG. 12(b).

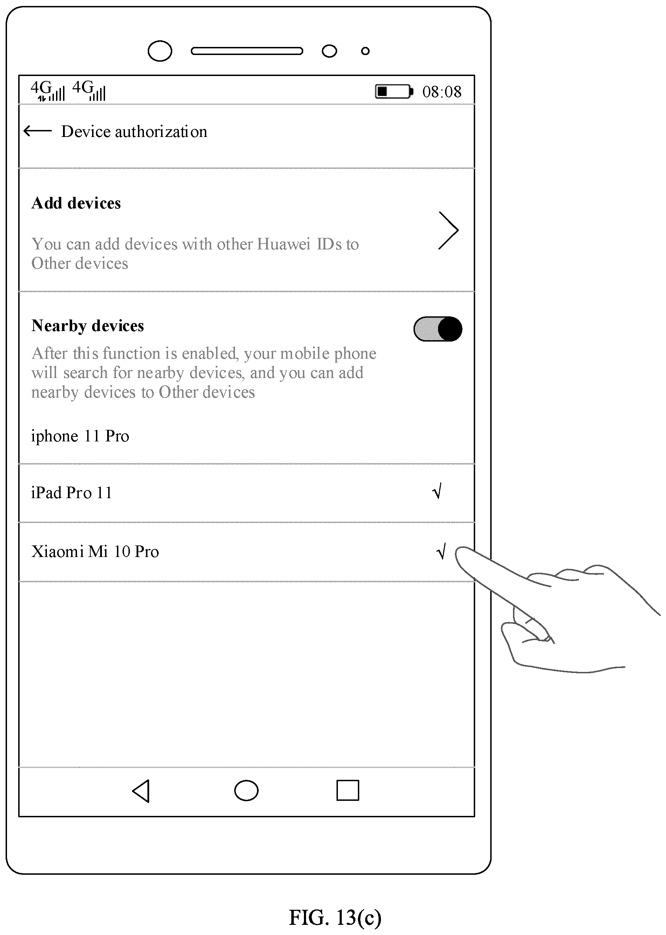

After the mobile phone detects an operation of tapping the "Nearby devices" control by the user, the mobile phone may search for a nearby device and display a GUI shown in FIG. 13(c).

Refer to the GUI shown in FIG. 13(c). The GUI is another display interface of the "Device authorization" function. Nearby devices that are found by the mobile phone and that are displayed on the display interface include iPhone 11 Pro, iPad Pro 11, and Xiaomi Mi 10 Pro. After the mobile phone detects an operation of tapping to add iPad Pro 11 and Xiaomi Mi 10 Pro by the user, the mobile phone may add the two devices to Other devices in Device management.

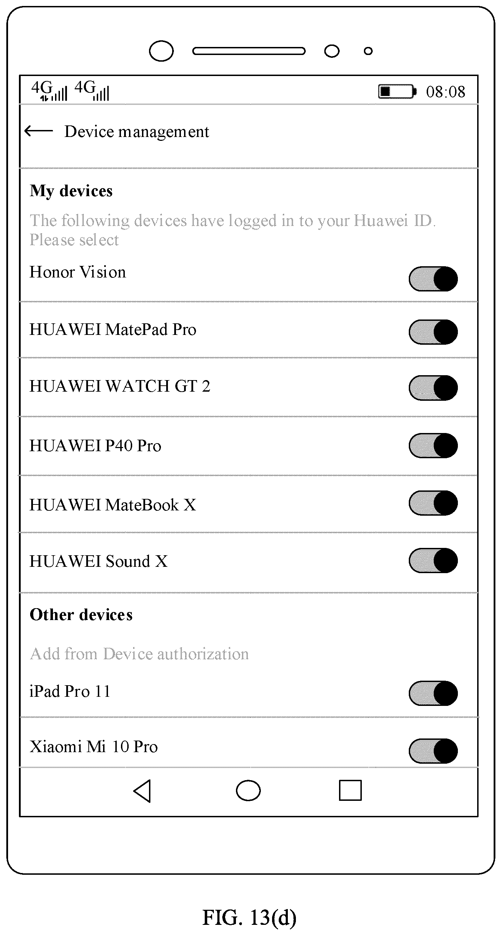

Refer to a GUI shown in FIG. 13(d). The GUI is another display interface of Device management. Two nearby devices, namely, iPad Pro 11 and Xiaomi Mi 10 Pro, are added to "Other devices" on the display interface.

In this embodiment of this application, the mobile phone may find another device around the mobile phone in a manner of short-range communication, for example, Bluetooth or Wi-Fi. For example, after detecting the operation of tapping to add iPad Pro 11 and Xiaomi Mi 10 Pro by the user, the mobile phone may send a BLE data packet to the two devices. The BLE data packet may carry request information for requesting to add as a device for forwarding a notification message (the request information may be carried in an extensible bit in a service data field). If the mobile phone receives responses (for example, ACK information) from the two devices, the mobile phone may successfully add the two devices to "Other devices". Further, on the iPad Pro 11 and the Xiaomi Mi 10 Pro, a reminder box may be used to prompt the user whether to agree to the addition request from the mobile phone. If the iPad Pro 11 and the Xiaomi Mi 10 Pro detect that the user indicates to agree to the request of adding as a device for forwarding a notification message, the two devices may send the response to the mobile phone.

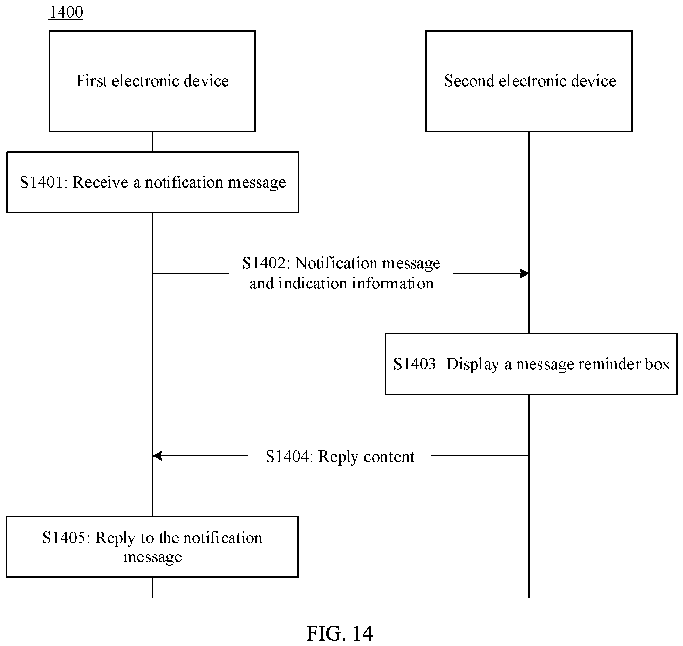

FIG. 14 is a schematic flowchart of a quick reply method 1400 according to an embodiment of this application. As shown in FIG. 14, the method 1400 may be performed by a first electronic device and a second electronic device. The first electronic device may be the source end in FIG. 8, and the second electronic device may be the sink end in FIG. 8. The method 1400 includes the following steps.

S1401: The first electronic device receives a message.

For example, as shown in FIG. 3(a), the first electronic device may be the mobile phone, and the mobile phone receives the message sent by the user Tom.

For example, as shown in FIG. 6(a), the first electronic device may be the mobile phone, and the mobile phone receives the message sent by the user Tom.

It should be understood that the message in this embodiment of this application may be messages sent by servers for different applications. Types of the messages include but are not limited to a text, a voice, audio, a video, a link, sharing (for example, location sharing), an invitation (for example, inviting to join a group), and the like.

S1402: The first electronic device sends the message and indication information to the second electronic device when determining that a device on which an owner of the first electronic device focuses is the second electronic device. The indication information is used to indicate the second electronic device to add a reply control for the message.

Optionally, the indication information may be a quick reply flag attribute.

It should be understood that, for a process in which the first electronic device sends the message and the indication information to the second electronic device, refer to the descriptions in the foregoing embodiment. For brevity, details are not described herein again.

In an embodiment, the first electronic device may send request information to a nearby device when the first electronic device determines that a focus of the owner of the first electronic device is not on the first electronic device. The request information is used to request the nearby device to determine whether the focus of the owner of the first electronic device is on the nearby device. Alternatively, the first electronic device may store a list of devices to which the message is forwarded, and the first electronic device may send request information to a device in the device list when the first electronic device determines that a focus of the owner the first electronic device is not on the first electronic device.

In an embodiment, if the second electronic device is an electronic device in the device list of the first electronic device and the second electronic device stores a user feature of the owner of the first electronic device (for example, the second electronic device and the first electronic device are two devices of a same user (that is, logged in with a same Huawei ID), and the first electronic device and the second electronic device may store a same user feature (for example, fingerprint information, facial information, voiceprint information, or iris information)). The first electronic device may send the request information to the second electronic device by using a server or in a manner of short-range communication. After receiving the request information sent by the first electronic device, the second electronic device may collect a feature of the user and determine whether the feature of the user matches a preset user feature of the owner of the first electronic device. If the feature of the user matches the preset user feature, the second electronic device sends response information to the first electronic device. The response information is used to indicate that the owner of the first electronic device is focusing on the second electronic device. The second electronic device may send the message to the second electronic device after receiving the response information.

For example, the request information may be carried in a BLE data packet. The BLE data packet includes a PDU. The request information may be carried in a service data field in the PDU, or may be carried in a manufacturer specific data field in the PDU. For example, a payload (payload) of the service data field may include a plurality of bits. The plurality of bits include an extensible bit. The first electronic device and the second electronic device may agree in advance on a bit for transmitting the request information. When the extensible bit is a preset value (for example, 1), the second electronic device may learn that the first electronic device requests the second electronic device to determine whether the user focuses on the device.

In an embodiment, the first electronic device may store a priority for determining a focus device. For example, a priority order may be:
(1) a visual focus;
(2) a personal device; and
(3) an interaction focus.

It should be understood that the visual focus device may be a device having a camera, for example, a smart television, a tablet computer, or a notebook computer. The personal device may be a wearable device of the user, for example, VR/AR glasses, a smartwatch, or a smart band. The interaction device may be a device having an input control, for example, a device having a keyboard, a mouse, a touch control, a remote control, or a voice input.

If the first electronic device stores a list of devices to which the message is forwarded, the first electronic device may send request information to a device in the device list. The first electronic device may send the request information to the device in the device list based on a priority of the device.

For example, if devices in a device list of the first electronic device (for example, a mobile phone) include a smart television and a smartwatch, the mobile phone may first send the request information to the smart television (which stores facial information of the owner of the first electronic device). The request information is used to request the smart television to determine whether the current focus of the owner of the first electronic device is on the smart television. After receiving the request information, the smart television may determine, in a manner of enabling a camera, whether the focus of the owner of the first electronic device is on the smart television. If the smart television determines, by using facial information collected by the camera and preset facial information, that a current focus device of the owner of the mobile phone is on the smart television, the smart television may send a response to the mobile phone. The response is used to indicate that the current focus of the owner of the mobile phone is on the smart television. After receiving the response, the mobile phone may no longer send the request information to another device in the device list. If the mobile phone receives no response of the smart television within preset duration (or the mobile phone receives a response sent by the smart television, where the response indicates that the current focus of the owner of the mobile phone is not on the smart television), the mobile phone may continue to send the request information to the smartwatch (which stores heart rate information of the owner of the first electronic device). After receiving the request information sent by the mobile phone, the smartwatch may detect, based on a sensor, whether the owner of the mobile phone is wearing a wearable device. For example, a photoplethysmography (photoplethysmography, PPG) sensor in the smartwatch may determine, by using detected heart rate information and preset heart rate information, whether the owner of the first electronic device is wearing the smartwatch. If the smartwatch determines that the owner of the mobile phone is wearing the smartwatch, the smartwatch may send a response to the mobile phone. The response is used to indicate that the owner of the mobile phone is currently wearing the smartwatch.

When sending the request information to the device in the device list, the first electronic device may alternatively send the request information to a plurality of devices in the device list at the same time.

For example, if devices in a device list of a mobile phone include a smart television and a smartwatch, the mobile phone may first send the request information to the smart television and the smartwatch at the same time. If the mobile phone directly receives only a response of the smart television, the mobile phone may forward the message to the smart television. Alternatively, if the mobile phone receives only a response of the smartwatch, the mobile phone may forward the message to the smartwatch. Alternatively, if the mobile phone receives responses of the smart television and the smartwatch, the mobile phone may forward the message to the smart television based on priorities of the devices.

For example, the response information may be carried in a service data field or a manufacturer specific data field in a PDU in a BLE data packet. For example, the response information may be carried on an extensible bit in a payload of the service data field. The first electronic device and the second electronic device may agree in advance on an extensible bit for transmitting the response information. The extensible bit being a preset value (for example, 1) indicates that the second electronic device determines that the device on which the user focuses is the second electronic device.

In an embodiment, the second electronic device is an electronic device in the device list of the first electronic device and the second electronic device store no user feature of the owner of the first electronic device, or the first electronic device has no device list and the second electronic device is a device around the first electronic device. In this case, the first electronic device may send the request information to the second electronic device when determining that the owner of the first electronic device does not focus on the first electronic device. After receiving the request information, the second electronic device may collect a user feature by using a user feature collection apparatus, and send the collected user feature to the first electronic device. The first electronic device may send the message to the second electronic device when determining that the user feature collected by the second electronic device matches a preset user feature in the first electronic device.

It should be understood that, in a case in which the second electronic device is an electronic device in the device list of the first electronic device and the second electronic device stores the user feature of the owner of the first electronic device, after receiving the request information, the second electronic device may also collect a user feature and send the user feature to the first electronic device, so that the first electronic device determines, based on the user feature collected by the second electronic device and a preset user feature, whether the owner of the first electronic device focuses on the second electronic device.

For example, the user feature sent by the second electronic device to the first electronic device may be carried in a service data field or a manufacturer specific field in a PDU.

The second electronic device includes a camera. After receiving the request information, the second electronic device collects facial information by using the camera and send the facial information to the first electronic device. The first electronic device determines, based on the facial information, whether there is only the user. The first electronic device matches the facial information collected by the second electronic device with preset facial information in the first electronic device, and if the matching succeeds, determine that the owner of the first electronic device currently focuses on the second electronic device.

For another example (not covered by the claims), the second electronic device includes a microphone. After receiving the request information, the second electronic device may collect, by using the microphone, voice information sent by the user and send the voice information to the first electronic device. The first electronic device determines, based on the voice information, whether there is only the user. For example, the first electronic device may extract voiceprint information in the voice information collected by the second electronic device. The first electronic device matches the extracted voiceprint information with preset voiceprint information in the first electronic device, and if the matching succeeds, determines that the user currently focuses on the second electronic device.

In this embodiment of this application, when the first electronic device requests, from the second electronic device, whether the owner of the first electronic device focuses on the second electronic device, the second electronic device may send the user feature collected by the second electronic device to the first electronic device, so that the first electronic device can determine, based on the received user feature and the preset user feature, whether the second electronic device is the device on which the owner of the first electronic device focuses. This helps improve security during message forwarding, and avoids disclosure of user privacy, thereby improving user experience.

S1403: The second electronic device displays a message reminder box. The message reminder box includes the message and the reply control.

For example, as shown in FIG. 3(a), the second electronic device may be the tablet computer. The tablet computer may display the message reminder box 301 after receiving the message and indication information that are sent by the mobile phone. The message reminder box 301 includes the message "Happy Birthday!", and the reply control 302.

For example, as shown in FIG. 6(a), the second electronic device may be the notebook computer. The notebook computer may display the message reminder box 601 after receiving the message and indication information that are sent by the mobile phone. The message reminder box 601 includes the message "Please send me the project plan" and the reply control 602.

S1404: The second electronic device sends reply content to the first electronic device when detecting an operation of replying to the message by the user.

For example, as shown in FIG. 3(b), the tablet computer may send the reply content in the text input box 303 to the mobile phone after the tablet computer detects the operation of tapping the control 304 by the user.

For example, as shown in FIG. 4(b), the notebook computer may send the reply content in the text input box 404 to the mobile phone after the notebook computer detects the operation of tapping the control 405 by the user.

S1405: The first electronic device replies to the message based on the reply content.

In this embodiment of this application, for a manner in which the first electronic device replies to the message, refer to the process in which the event processing module of the source end makes the real reply to the message in FIG. 8. For brevity, details are not described herein again.

For example, as shown in FIG. 3(c) to FIG. 3(e), or as shown in FIG. 4(c) to FIG. 4(e), the mobile phone may first start the social app, then open the chat interface with the user Tom, and finally drag the reply content "Thank you!" to a location at which the message "Happy Birthday!" is replied to.

Optionally, the method 1100 further includes: The first electronic device sends identification information of the message to the second electronic device. When detecting an operation of replying to the message by the user, the second electronic device sends, to the second electronic device, the reply content identified by using the identification information. For example, the message body sent by the first electronic device to the second electronic device may carry content of the message, the indication information, and the identification information of the message.

Optionally, the identification information may be a notification ID attribute and/or a notification channel attribute of the message.

For example, as shown in FIG. 4(a), the mobile phone receives two messages (where a message 1 is from Tom, and a message 2 is from Amy). In this case, the mobile phone sends, to the notebook computer, the message 1 identified by using identification information 1, the message 2 identified by using identification information 2, and indication information.

In this way, the notebook computer may display the message reminder box 401 and the message reminder box 402 after receiving the foregoing information. When the notebook computer detects an operation of replying to the message 1 by the user, the notebook computer may send, to the mobile phone, reply content (for example, "Thank you! ") identified by using the identification information 1. By identifying the message, the mobile phone can clearly know a message to which the reply content sent by the notebook computer is replied.

In this embodiment of this application, the first electronic device may identify a plurality of messages when the first electronic device receives the plurality of messages, so that the first electronic device can distinguish reply content sent by the second electronic device. In this way, the first electronic device can accurately reply to the plurality of messages.

Optionally, the method further includes: The first electronic device displays a first interface before receiving the message. The first electronic device displays the first interface after replying to the message.

In this embodiment of this application, the first electronic device may complete a real reply to the message after receiving the reply content sent by the second electronic device. After completing the reply, the first electronic device may continue to display a state before the message is received. By restoring the original state of the first electronic device, a quick reply function is imperceptible to the user, to further improve user experience.

Optionally, the content of the message is text information, and the second electronic device has a voice function. After receiving the message, the second electronic device prompts the user with the text information by using a voice.

For example, as shown on the GUI in FIG. 5(a) to FIG. 5(d), the head unit has a voice function. In this case, the head unit may further prompt, after receiving the message sent by the mobile phone, the user with text information by using a voice. For example, the head unit prompts the user with "Tom sent 'Happy Birthday!' to you by using the social app" by using the voice.

In this embodiment of this application, in a scenario in which the second electronic device is a head unit, the head unit may prompt the user with the content of the message in a voice broadcast manner. This can avoid distraction caused by viewing the message by the user, thereby helping improve driving safety of the user.

Optionally, before sending the reply content to the user, the second electronic device collects voice information with which the user replies. The second electronic device sends the voice information to the first electronic device, or the second electronic device sends text information corresponding to the voice information to the first electronic device.

For example, on the GUI shown in FIG. 5(a) to FIG. 5(d), the user replies with voice information "Thank you!". The head unit may send the voice information to the mobile phone, or the head unit may send text information corresponding to the voice information to the mobile phone.

In an embodiment, the second electronic device may alternatively send the voice information to the first electronic device. The first electronic device may reply to the message based on the voice information, or the first electronic device may reply to the message based on the text information corresponding to the voice information.

Optionally, the reply content is a file.

For example, as shown in FIG. 6(b), the notebook computer may send the Word file (which is the project plan.doc) to the mobile phone after the notebook computer detects that the user drags the Word file to the text input box.

Optionally, the file may be alternatively a multimedia file, for example, a photo, a video, or audio.

In this embodiment of this application, the user can directly complete replying to the message on the second electronic device, without returning to the first electronic device to process the message. This can avoid the user from missing important information, and also avoids a process in which the user returns to the first electronic device to process the message, thereby helping improve user experience.

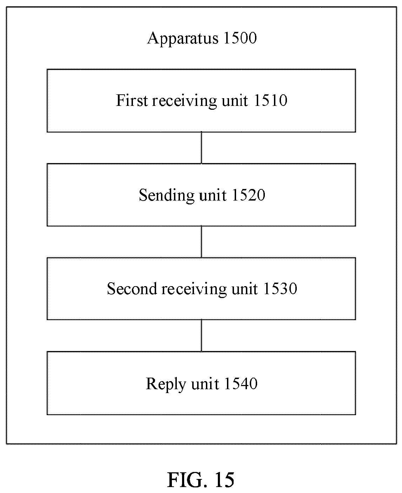

FIG. 15 is a schematic block diagram of a message reply apparatus 1500 according to an embodiment of this application. The apparatus 1500 may be disposed in a first electronic device. The apparatus 1500 includes: a first receiving unit 1510, configured to receive a message; a sending unit 1520, configured to send the message and indication information to a second electronic device when determining that a device on which an owner of the first electronic device focuses is the second electronic device, where the indication information indicates the second electronic device to add a reply control for the message; a second receiving unit 1530, further configured to receive reply content that is sent by the second electronic device for the message; and a reply unit 1540, configured to reply to the message based on the reply content.

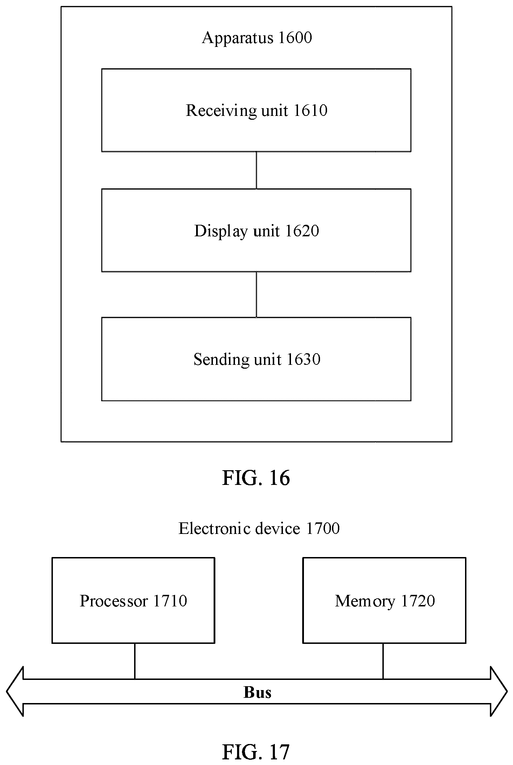

FIG. 16 is a schematic block diagram of a message reply apparatus 1600 according to an embodiment of this application. The apparatus 1600 may be disposed in a second electronic device. The apparatus 1600 includes: a receiving unit 1610, configured to receive a message and indication information that are sent by a first electronic device, where the indication information indicates the second electronic device to add a reply control for the message; a display unit 1620, configured to display a message reminder box, where the message reminder box includes the message and the reply control; and a sending unit 1630, configured to send reply content to the first electronic device when detecting an operation of replying to the message by a user.

FIG. 17 is a schematic diagram of a structure of an electronic device 1700 according to an embodiment of this application. As shown in FIG. 17, the electronic device includes one or more processors 1710 and one or more memories 17220. The one or more memories 1720 store one or more computer programs, and the one or more computer programs include instructions. When the instructions are run by the one or more processors 1710, a first electronic device is enabled to execute the technical solutions in the foregoing embodiments. Alternatively, when the instructions are run by the one or more processors 1710, a second electronic device is enabled to execute the technical solutions in the foregoing embodiments. Implementation principles and technical effects thereof are similar to those of the foregoing method embodiments. Details are not described herein again.

An embodiment of this application provides a message reply system, including a first device and a second device. The system is configured to execute the message reply technical solution in the foregoing embodiments. Implementation principles and technical effects thereof are similar to those of the foregoing method embodiments. Details are not described herein again.

An embodiment of this application provides a computer program product. When the computer program product runs on a first electronic device, the first electronic device is enabled to execute the technical solutions in the foregoing embodiments. Alternatively, when the computer program product runs on a second electronic device, the second electronic device is enabled to execute the technical solutions in the foregoing embodiments. Implementation principles and technical effects thereof are similar to those of the foregoing method embodiments. Details are not described herein again.

An embodiment of this application provides a readable storage medium. The readable storage medium includes instructions. When the instructions are run on a first electronic device, the first electronic device is enabled to execute the technical solutions in the foregoing embodiments. Alternatively, when the instructions are run on a second electronic device, the second electronic device is enabled to execute the technical solutions in the foregoing embodiments. Implementation principles and technical effects thereof are similar, and details are not described herein again.

An embodiment of this application provides a chip. The chip is configured to execute instructions. When the chip runs, the technical solutions in the foregoing embodiments are executed. Implementation principles and technical effects thereof are similar, and details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A system, wherein the system comprises a first electronic device and a second electronic device, wherein
the first electronic device is configured to receive a message;
the first electronic device is further configured to send the message and indication information to the second electronic device when determining that a device on which an owner of the first electronic device focuses is the second electronic device, wherein the second electronic device collect facial information by using a camera and send the facial information to the first electronic device and the first electronic device matches the facial information collected by the second electronic device with preset facial information in the first electronic device, and if the matching succeeds, determine that the owner of the first electronic device currently focuses on the second electronic device, and wherein the indication information indicates the second electronic device to add a reply control (302, 403, 602) for the message;
the second electronic device is configured to display a message reminder box (301, 401, 402, 501, 601, 701-703), wherein the message reminder box (301, 401, 402, 501, 601, 701-703) comprises the message and the reply control (302, 403, 602);
the second electronic device is further configured to send reply content to the first electronic device when detecting an operation of replying to the message by a user; and
the first electronic device is further configured to reply to the message based on the reply content wherein the reply content comprises text information, voice information, or a file.

2. The system according to claim 1, wherein the first electronic device is specifically configured to send the message identified by using identification information to the second electronic device; and
the second electronic device is specifically configured to send the reply content identified by using the identification information to the first electronic device.

3. The system according to claim 1 or 2, wherein the first electronic device is further configured to: display a first interface before receiving the message; and
display the first interface after replying to the message.

4. The system according to any one of claims 1 to 3, wherein content of the message is text information, the second electronic device comprises a voice function, and the second electronic device is further configured to:
after receiving the message, prompt the user with the text information by using a voice.

5. The system according to claim 4, wherein the second electronic device is specifically configured to:
before sending the reply content to the first electronic device, collect voice information with which the user replies; and
send the voice information to the first electronic device, or send text information corresponding to the voice information to the first electronic device.

6. The system according to any one of claims 1 to 5, wherein the first electronic device is further configured to: before sending the message and the indication information to the second electronic device, determine that a type of the message is a message type that is set by the user; or
before sending the message and the indication information to the second electronic device, determine that the message is a message of an instant messaging, IM type.

7. The system according to any one of claims 1 to 6, wherein the first electronic device is further configured to: before sending the message and the indication information to the second electronic device, determine that the second electronic device is a device that is set by the user for receiving message forwarding; or
before sending the message and the indication information to the second electronic device, determine that an account for logging in to the first electronic device is associated with an account for logging in to the second electronic device.

8. The system according to any one of claims 1 to 7, wherein the first electronic device is specifically configured to send request information to the second electronic device when determining that a device on which the owner of the first electronic device currently focuses is not the first electronic device, wherein the request information is used to request the second electronic device to determine whether the owner of the first electronic device focuses on the second electronic device;
the second electronic device is further configured to send response information to the first electronic device based on the request information, wherein the response information is used to indicate that the device on which the owner of the first electronic device currently focuses is the second electronic device; and
the first electronic device is specifically configured to send the message to the second electronic device in response to receiving the response information.

9. The system according to any one of claims 1 to 7, wherein the second electronic device comprises a user feature collection apparatus, and the first electronic device is specifically configured to send request information to the second electronic device when determining that a device on which the owner of the first electronic device currently focuses is not the first electronic device, wherein the request information is used to request the second electronic device to determine whether the owner of the first electronic device focuses on the second electronic device;
the second electronic device is further configured to: collect a user feature based on the request information by using the user feature collection apparatus, and send the user feature to the first electronic device; and
the first electronic device is specifically configured to: before sending the message to the second electronic device, determine that the user feature matches a preset user feature in the first electronic device.

10. The system according to any one of claims 1 to 9, wherein the message is a message of a first application, and the second electronic device is a device on which the first application is not installed.

11. A message reply method, wherein the method (1400) is applied to a first electronic device, and the method (1400) comprises:
receiving, by the first electronic device, a message;
sending, by the first electronic device, the message and indication information to a second electronic device when determining that a device on which an owner of the first electronic device focuses is the second electronic device, wherein the first electronic device matches a facial information collected by the second electronic device with preset facial information in the first electronic device, and if the matching succeeds, determine that the owner of the first electronic device currently focuses on the second electronic device, and wherein the indication information indicates the second electronic device to add a reply control (302, 403, 602) for the message;
receiving, by the first electronic device, reply content that is sent by the second electronic device for the message; and
replying, by the first electronic device, to the message based on the reply content wherein the reply content comprises text information, voice information, or a file.

12. An electronic device (1700), comprising one or more processors and one or more memories, wherein the one or more memories store one or more computer programs, the one or more computer programs comprise instructions, and when the instructions are executed by the one or more processors, the electronic device (1700) is enabled to perform the message reply method according to claim 11.

13. A computer-readable storage medium, comprising computer instructions, wherein when the computer instructions are run on an electronic device (1700), the electronic device (1700) is enabled to perform the message reply method according to claim 11.

## Patentansprüche

1. System, wobei das System eine erste elektronische Vorrichtung und eine zweite elektronische Vorrichtung umfasst, wobei
die erste elektronische Vorrichtung zum Empfangen einer Nachricht konfiguriert ist;
die erste elektronische Vorrichtung ferner dazu konfiguriert, die Nachricht und Angabeinformationen an die zweite elektronische Vorrichtung zu senden, wenn bestimmt ist, dass eine Vorrichtung, auf die sich ein Besitzer der ersten elektronischen Vorrichtung konzentriert, die zweite elektronische Vorrichtung ist, wobei die zweite elektronische Vorrichtung unter Verwendung einer Kamera Gesichtsinformationen erfassen und die Gesichtsinformationen an die erste elektronische Vorrichtung senden und die erste elektronische Vorrichtung die durch die zweite elektronische Vorrichtung erfassten Gesichtsinformationen mit voreingestellten Gesichtsinformationen in der ersten elektronischen Vorrichtung abgleicht, und, wenn das Abgleichen erfolgreich ist, zu bestimmen, dass der Besitzer der ersten elektronischen Vorrichtung sich aktuell auf die zweite elektronische Vorrichtung konzentriert, und wobei die Angabeinformationen der zweiten elektronischen Vorrichtung angeben, ein Antwortsteuerelement (302, 403, 602) für die Nachricht hinzuzufügen;
die zweite elektronische Vorrichtung dazu konfiguriert ist, ein Nachrichtenerinnerungsfeld (301, 401, 402, 501, 601, 701-703) anzuzeigen, wobei das Nachrichtenerinnerungsfeld (301, 401, 402, 501, 601, 701-703) die Nachricht und das Antwortsteuerelement (302, 403, 602) umfasst;
die zweite elektronische Vorrichtung ferner dazu konfiguriert ist, Antwortinhalte an die erste elektronische Vorrichtung zu senden, wenn es einen Vorgang eines Beantwortens der Nachricht durch einen Benutzer erkennt; und
die erste elektronische Vorrichtung ferner dazu konfiguriert ist, die Nachricht basierend auf dem Antwortinhalt zu beantworten, wobei der Antwortinhalt Textinformationen, Sprachinformationen oder eine Datei umfasst.

2. System nach Anspruch 1, wobei die erste elektronische Vorrichtung speziell dazu konfiguriert ist, die unter Verwendung von Identifizierungsinformationen identifizierte Nachricht an die zweite elektronische Vorrichtung zu senden; und
die zweite elektronische Vorrichtung speziell dazu konfiguriert ist, den unter Verwendung der Identifikationsinformationen identifizierten Antwortinhalt an die erste elektronische Vorrichtung zu senden.

3. System nach Anspruch 1 oder 2, wobei die erste elektronische Vorrichtung ferner zu Folgendem konfiguriert ist:
Anzeigen einer ersten Schnittstelle vor dem Empfangen der Nachricht; und
Anzeigen der ersten Schnittstelle nach dem Beantworten der Nachricht.

4. System nach einem der Ansprüche 1 bis 3, wobei der Inhalt der Nachricht Textinformationen sind, die zweite elektronische Vorrichtung eine Sprachfunktion umfasst und die zweite elektronische Vorrichtung ferner zu Folgendem konfiguriert ist:
nach dem Empfangen der Nachricht, Vorlesen der Textinformationen für den Benutzer unter Verwendung von Sprache.

5. System nach Anspruch 4, wobei die zweite elektronische Vorrichtung speziell zu Folgendem konfiguriert ist:
vor dem Senden des Antwortinhalts an die erste elektronische Vorrichtung Erfassen von Sprachinformationen, mit denen der Benutzer antwortet; und
Senden der Sprachinformationen an die erste elektronische Vorrichtung oder Senden von Textinformationen, die den Sprachinformationen entsprechen, an die erste elektronische Vorrichtung.

6. System nach einem der Ansprüche 1 bis 5, wobei die erste elektronische Vorrichtung ferner zu Folgendem konfiguriert ist:
vor dem Senden der Nachricht und der Angabeinformationen an die zweite elektronische Vorrichtung, Bestimmen, dass ein Typ der Nachricht ein Nachrichtentyp ist, der durch den Benutzer eingestellt ist; oder
vor dem Senden der Nachricht und der Angabeinformationen an die zweite elektronische Vorrichtung, Bestimmen, dass die Nachricht eine Nachricht vom Typ Instant Messaging, IM, ist.

7. System nach einem der Ansprüche 1 bis 6, wobei die erste elektronische Vorrichtung ferner zu Folgendem konfiguriert ist:
vor dem Senden der Nachricht und der Angabeinformationen an die zweite elektronische Vorrichtung, Bestimmen, dass die zweite elektronische Vorrichtung eine Vorrichtung ist, die durch den Benutzer für ein Empfangen von Nachrichtenweiterleitungen eingestellt ist; oder
vor dem Senden der Nachricht und der Angabeinformationen an die zweite elektronische Vorrichtung, Bestimmen, dass ein Konto zum Anmelden an der ersten elektronischen Vorrichtung einem Konto zum Anmelden an der zweiten elektronischen Vorrichtung zugeordnet ist.

8. System nach einem der Ansprüche 1 bis 7, wobei die erste elektronische Vorrichtung speziell dazu konfiguriert ist, Anforderungsinformationen an die zweite elektronische Vorrichtung zu senden, wenn bestimmt ist, dass eine Vorrichtung, auf die sich der Besitzer der ersten elektronischen Vorrichtung aktuell konzentriert, nicht die erste elektronische Vorrichtung ist, wobei die Anforderungsinformationen verwendet werden, um die zweite elektronische Vorrichtung anzufordern, zu bestimmen, ob sich der Besitzer der ersten elektronischen Vorrichtung auf die zweite elektronische Vorrichtung konzentriert;
die zweite elektronische Vorrichtung ferner dazu konfiguriert ist, basierend auf den Anforderungsinformationen Antwortinformationen an die erste elektronische Vorrichtung zu senden, wobei die Antwortinformationen verwendet werden, um anzugeben, dass die Vorrichtung, auf die sich der Besitzer der ersten elektronischen Vorrichtung aktuell konzentriert, die zweite elektronische Vorrichtung ist; und
die erste elektronische Vorrichtung speziell dazu konfiguriert ist, als Reaktion auf ein Empfangen der Antwortinformationen die Nachricht an die zweite elektronische Vorrichtung zu senden.

9. System nach einem der Ansprüche 1 bis 7, wobei die zweite elektronische Vorrichtung eine Benutzermerkmalserfassungseinrichtung umfasst und die erste elektronische Vorrichtung speziell dazu konfiguriert ist, Anforderungsinformationen an die zweite elektronische Vorrichtung zu senden, wenn bestimmt ist, dass eine Vorrichtung, auf die sich der Besitzer der ersten elektronischen Vorrichtung aktuell konzentriert, nicht die erste elektronische Vorrichtung ist, wobei die Anforderungsinformationen verwendet werden, um die zweite elektronische Vorrichtung anzufordern, zu bestimmen, ob sich der Besitzer der ersten elektronischen Vorrichtung auf die zweite elektronische Vorrichtung konzentriert;
die zweite elektronische Vorrichtung ferner zu Folgendem konfiguriert ist: Erfassen eines Benutzermerkmals basierend auf den Anforderungsinformationen unter Verwendung der Benutzermerkmalserfassungseinrichtung und Senden des Benutzermerkmals an die erste elektronische Vorrichtung; und die erste elektronische Vorrichtung speziell zu Folgendem konfiguriert ist: vor dem Senden der Nachricht an die zweite elektronische Vorrichtung, Bestimmen, dass das Benutzermerkmal mit einem voreingestellten Benutzermerkmal in der ersten elektronischen Vorrichtung übereinstimmt.

10. System nach einem der Ansprüche 1 bis 9, wobei die Nachricht eine Nachricht einer ersten Anwendung ist und die zweite elektronische Vorrichtung eine Vorrichtung ist, auf der die erste Anwendung nicht installiert ist.

11. Verfahren zum Beantworten einer Nachricht, wobei das Verfahren (1400) auf eine erste elektronische Vorrichtung angewendet wird und das Verfahren (1400) Folgendes umfasst:
Empfangen einer Nachricht durch die erste elektronische Vorrichtung;
Senden, durch die erste elektronische Vorrichtung, der Nachricht und von Angabeinformationen an eine zweite elektronische Vorrichtung, wenn bestimmt ist, dass eine Vorrichtung, auf die sich ein Besitzer der ersten elektronischen Vorrichtung konzentriert, die zweite elektronische Vorrichtung ist, wobei die erste elektronische Vorrichtung durch die zweite elektronische Vorrichtung erfasste Gesichtsinformationen mit voreingestellten Gesichtsinformationen in der ersten elektronischen Vorrichtung abgleicht, und, wenn das Abgleichen erfolgreich ist, bestimmen, dass der Besitzer der ersten elektronischen Vorrichtung sich aktuell auf die zweite elektronische Vorrichtung konzentriert, und wobei die Angabeinformationen der zweiten elektronischen Vorrichtung angeben, ein Antwortsteuerelement (302, 403, 602) für die Nachricht hinzuzufügen;
Empfangen von Antwortinhalt durch die erste elektronische Vorrichtung, der durch die zweite elektronische Vorrichtung für die Nachricht gesendet wird; und
Beantworten der Nachricht durch die erste elektronische Vorrichtung basierend auf dem Antwortinhalt, wobei der Antwortinhalt Textinformationen, Sprachinformationen oder eine Datei umfasst.

12. Elektronische Vorrichtung (1700), umfassend einen oder mehrere Prozessoren und einen oder mehrere Speicher, wobei der eine oder die mehreren Speicher ein oder mehrere Computerprogramme speichern, das eine oder die mehreren Computerprogramme Anweisungen umfassen und, wenn die Anweisungen durch den einen oder die mehreren Prozessoren ausgeführt werden, die elektronische Vorrichtung (1700) in die Lage versetzt wird, das Verfahren zum Beantworten einer Nachricht nach Anspruch 11 durchzuführen.

13. Computerlesbares Speichermedium, umfassend Computeranweisungen, wobei, wenn die Computeranweisungen auf einer elektronischen Vorrichtung (1700) laufen, die elektronische Vorrichtung (1700) in die Lage versetzt wird, das Verfahren zum Beantworten einer Nachricht nach Anspruch 11 durchzuführen.

## Revendications

1. Système, dans lequel le système comprend un premier dispositif électronique et un second dispositif électronique, dans lequel
le premier dispositif électronique est configuré pour recevoir un message ;
le premier dispositif électronique est également configuré pour envoyer le message et les informations d'indication au second dispositif électronique lorsqu'il est déterminé qu'un dispositif sur lequel un propriétaire du premier dispositif électronique se concentre est le second dispositif électronique, dans lequel le second dispositif électronique collecte des informations faciales à l'aide d'une caméra et envoie les informations faciales au premier dispositif électronique et le premier dispositif électronique fait correspondre les informations faciales collectées par le second dispositif électronique avec des informations faciales prédéfinies dans le premier dispositif électronique, et si la correspondance réussit, déterminer que le propriétaire du premier dispositif électronique se concentre actuellement sur le second dispositif électronique, et dans lequel les informations d'indication indiquent au second dispositif électronique d'ajouter une commande de réponse (302, 403, 602) pour le message ;
le second dispositif électronique est configuré pour afficher une boîte de rappel de message (301, 401, 402, 501, 601, 701 à 703), dans lequel la boîte de rappel de message (301, 401, 402, 501, 601, 701 à 703) comprend le message et la commande de réponse (302, 403, 602) ;
le second dispositif électronique est également configuré pour envoyer un contenu de réponse au premier dispositif électronique lors de la détection d'une opération de réponse au message par un utilisateur ; et
le premier dispositif électronique est également configuré pour répondre au message sur la base du contenu de réponse dans lequel le contenu de réponse comprend des informations textuelles, des informations vocales, ou un fichier.

2. Système selon la revendication 1, dans lequel le premier dispositif électronique est spécifiquement configuré pour envoyer le message identifié à l'aide d'informations d'identification au second dispositif électronique ; et
le second dispositif électronique est spécifiquement configuré pour envoyer le contenu de réponse identifié à l'aide des informations d'identification au premier dispositif électronique.

3. Système selon la revendication 1 ou 2, dans lequel le premier dispositif électronique est également configuré pour : afficher une première interface avant la réception du message ; et afficher la première interface après avoir répondu au message.

4. Système selon l'une quelconque des revendications 1 à 3, dans lequel le contenu du message est une information textuelle, le second dispositif électronique comprend une fonction vocale et est également configuré pour :
après avoir reçu le message, demander à l'utilisateur les informations textuelles à l'aide d'une voix.

5. Système selon la revendication 4, dans lequel le second dispositif électronique est spécifiquement configuré pour :
avant l'envoi du contenu de la réponse au premier dispositif électronique, collecter les informations vocales avec lesquelles l'utilisateur répond ; et
envoyer les informations vocales au premier dispositif électronique, ou envoyer des informations textuelles correspondant aux informations vocales au premier dispositif électronique.

6. Système selon l'une quelconque des revendications 1 à 5, dans lequel le premier dispositif électronique est également configuré pour : avant d'envoyer le message et les informations d'indication au second dispositif électronique, déterminer qu'un type de message est un type de message défini par l'utilisateur ; ou
avant d'envoyer le message et les informations d'indication au second dispositif électronique, déterminer que le message est un message de type messagerie instantanée, IM.

7. Système selon l'une quelconque des revendications 1 à 6, dans lequel le premier dispositif électronique est également configuré pour : avant d'envoyer le message et les informations d'indication au second dispositif électronique, déterminer que le second dispositif électronique est configuré par l'utilisateur pour recevoir le transfert de messages ; ou avant d'envoyer le message et les informations d'indication au second dispositif électronique, déterminer qu'un compte de connexion sur le premier dispositif électronique est associé à un compte de connexion sur le second dispositif électronique.

8. Système selon l'une quelconque des revendications 1 à 7, dans lequel le premier dispositif électronique est spécifiquement configuré pour envoyer des informations de demande au second dispositif électronique lorsqu'il est déterminé qu'un dispositif sur lequel le propriétaire du premier dispositif électronique se concentre actuellement n'est pas le premier dispositif électronique, dans lequel les informations de demande sont utilisées pour demander au second dispositif électronique de déterminer si le propriétaire du premier dispositif électronique se concentre sur le second dispositif électronique ;
le second dispositif électronique est également configuré pour envoyer des informations de réponse au premier dispositif électronique sur la base des informations de demande, dans lequel les informations de réponse sont utilisées pour indiquer que le dispositif sur lequel le propriétaire du premier dispositif électronique se concentre actuellement est le second dispositif électronique ; et
le premier dispositif électronique est spécifiquement configuré pour envoyer le message au second dispositif électronique en réponse à la réception des informations de réponse.

9. Système selon l'une quelconque des revendications 1 à 7, dans lequel le second dispositif électronique comprend un appareil de collecte de caractéristique utilisateur, et le premier dispositif électronique est spécifiquement configuré pour envoyer des informations de demande au second dispositif électronique lorsqu'il est déterminé qu'un dispositif sur lequel le propriétaire du premier dispositif électronique se concentre actuellement n'est pas le premier dispositif électronique, dans lequel les informations de demande sont utilisées pour demander au second dispositif électronique de déterminer si le propriétaire du premier dispositif électronique se concentre sur le second dispositif électronique ;
le second dispositif électronique est également configuré pour :
collecter une caractéristique utilisateur sur la base des informations de demande à l'aide d'un appareil de collecte de caractéristique utilisateur, et envoyer la caractéristique utilisateur au premier dispositif électronique ; et
le premier dispositif électronique est spécifiquement configuré pour : avant d'envoyer le message au second dispositif électronique, déterminer que la caractéristique utilisateur correspond à une caractéristique utilisateur prédéfinie dans le premier dispositif électronique.

10. Système selon l'une quelconque des revendications 1 à 9, dans lequel le message est un message d'une première application, et le second dispositif électronique est un dispositif sur lequel la première application n'est pas installée.

11. Procédé de réponse à un message, dans lequel le procédé (1400) est appliqué à un premier dispositif électronique, et le procédé (1400) comprend :
la réception, par le premier dispositif électronique, d'un message ;
l'envoi, par le premier dispositif électronique, du message et des informations d'indication à un second dispositif électronique lorsqu'il est déterminé qu'un dispositif sur lequel un propriétaire du premier dispositif électronique se concentre est le second dispositif électronique, dans lequel le premier dispositif électronique fait correspondre des informations faciales collectées par le second dispositif électronique avec des informations faciales prédéfinies dans le premier dispositif électronique, et si la correspondance réussit, déterminer que le propriétaire du premier dispositif électronique se concentre actuellement sur le second dispositif électronique, et dans lequel les informations d'indication indiquent au second dispositif électronique d'ajouter une commande de réponse (302, 403, 602) pour le message ;
la réception, par le premier dispositif électronique, du contenu de réponse envoyé par le second dispositif électronique pour le message ; et
la réponse, par le premier dispositif électronique, au message sur la base du contenu de réponse dans lequel le contenu de réponse comprend des informations textuelles, des informations vocales, ou un fichier.

12. Dispositif électronique (1700), comprenant un ou plusieurs processeurs et une ou plusieurs mémoires, dans lequel les une ou plusieurs mémoires stockent un ou plusieurs programmes informatiques, les un ou plusieurs programmes informatiques comprennent des instructions, et lorsque les instructions sont exécutées par les un ou plusieurs processeurs, le dispositif électronique (1700) est activé pour réaliser le procédé de réponse à un message selon la revendication 11.

13. Support de stockage lisible par ordinateur, comprenant des instructions informatiques, dans lequel, lorsque les instructions informatiques fonctionnent sur un dispositif électronique (1700), le dispositif électronique (1700) est activé pour réaliser le procédé de réponse à un message selon la revendication 11.
